(19) **Europäisches Patentamt / European Patent Office / Office européen des brevets**

(11) **EP 4 571 502 A1**

(12) # EUROPEAN PATENT APPLICATION
published in accordance with Art. 153(4) EPC

(43) Date of publication:
**18.06.2025 Bulletin 2025/25**

(21) Application number: **23879005.9**

(22) Date of filing: **11.10.2023**

(51) International Patent Classification (IPC):
*G06F 9/451* (2018.01)

(52) Cooperative Patent Classification (CPC):
**G06F 9/451**

(86) International application number:
**PCT/CN2023/124034**

(87) International publication number:
**WO 2024/083014 (25.04.2024 Gazette 2024/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.10.2022 CN 202211281435**

(71) Applicant: **Huawei Technologies Co., Ltd.**
**Shenzhen, Guangdong 518129 (CN)**

(72) Inventors:
• **CHEN, Jian**
**Shenzhen, Guangdong 518129 (CN)**

• **LI, Yu**
**Shenzhen, Guangdong 518129 (CN)**
• **YU, Tanqi**
**Shenzhen, Guangdong 518129 (CN)**
• **JI, Xingchun**
**Shenzhen, Guangdong 518129 (CN)**
• **ZHOU, Yaoying**
**Shenzhen, Guangdong 518129 (CN)**
• **WANG, Xinpeng**
**Shenzhen, Guangdong 518129 (CN)**

(74) Representative: **Huawei European IPR**
**Huawei Technologies Duesseldorf GmbH**
**Riesstraße 25**
**80992 München (DE)**

(54) ## INTERFACE GENERATION METHOD AND ELECTRONIC DEVICE

(57) This application discloses an interface generation method and an electronic device, and relates to the field of electronic technologies. The interface generation method provided in this application includes: splitting a render tree into a plurality of render sub-trees, concurrently converting the plurality of render sub-trees into a rendering instruction through a plurality of threads, and further generating an interface based on the rendering instructions. In this way, a delay in converting the render tree into the rendering instruction can be reduced, and frame loss and frame freezing on the interface can be avoided.

EP 4 571 502 A1

FIG. 8

## Description

This application claims priority to Chinese Patent Application No. 202211281435.9, filed with the China National Intellectual Property Administration on October 19, 2022 and entitled "INTERFACE GENERATION METHOD AND ELECTRONIC DEVICE", which is incorporated herein by reference in its entirety.

## TECHNICAL FIELD

This application relates to the field of electronic technologies, and in particular, to an interface generation method and an electronic device.

## BACKGROUND

With development of technologies, a resolution and a refresh rate of a screen of an electronic device are increasingly high. The resolution of the screen affects pixels included in one frame of interface, and the refresh rate affects time for generating one frame of interface.

Before the electronic device displays a first frame of interface, the electronic device needs to consume computing resources to generate the first frame of interface. Before the electronic device displays a second frame of interface, the electronic device needs to consume computing resources again to generate the second frame of interface.

When the electronic device does not generate the second frame of interface in time, content displayed on the screen of the electronic device freezes. To ensure that the second frame of interface can be generated in time, the electronic device usually increases a working frequency of a CPU to improve a computing capability of the electronic device. Consequently, energy consumption of generating one frame of interface by the electronic device is high, and an energy efficiency ratio of interface generation is reduced.

## SUMMARY

Embodiments of this application provide an interface generation method and an electronic device. According to the interface generation method provided in embodiments of this application, a render tree is split into a plurality of render sub-trees, and the plurality of render sub-trees are further concurrently converted into rendering instructions, to reduce duration of converting the render sub-trees into the rendering instructions, so as to reduce duration of interface generation, and avoid frame freezing, frame loss, and the like on an interface.

According to a first aspect, an embodiment of this application provides an interface generation method, applied to an electronic device on which a first application runs, where the method includes: The electronic device generates a first render tree, where the first render tree includes a drawing operation used to generate a frame of interface of the first application; the electronic device splits the first render tree to obtain N render sub-trees, where N is greater than 1; the electronic device concurrently converts the N render sub-trees into a first rendering instruction, where a rendering instruction is an instruction in a rendering engine, an image processing library, or a GPU driver; and the electronic device generates the frame of interface of the first application based on the first rendering instruction.

In the foregoing embodiment, the render tree is split into a plurality of render sub-trees, and then the plurality of render sub-trees are concurrently converted into the rendering instruction, to reduce duration of converting the render sub-trees into the rendering instruction, so as to reduce duration of interface generation, and avoid frame freezing, frame loss, and the like on the interface.

With reference to some embodiments of the first aspect, in some embodiments, that the electronic device splits the first render tree to obtain N render sub-trees specifically includes: The electronic device determines a first task load, where the first task load is a task load of the first render tree, and the first task load indicates consumed time or a computing amount for converting the first render tree into the first rendering instruction; and in response to determining, by the electronic device, that the first task load is greater than a first threshold, the electronic device splits the first render tree to obtain the N render sub-trees.

In the foregoing embodiments, it is considered that when the task load of the render tree is greater than the threshold, the time for converting the render tree into the rendering instruction is long. Therefore, the render tree is split into the plurality of render sub-trees only in this case, to reduce the duration. When the task load of the render tree is less than the threshold, the render tree may not be split.

With reference to some embodiments of the first aspect, in some embodiments, after the electronic device determines the first task load, the method further includes: The electronic device determines M based on the first task load and the first threshold, where M is less than or equal to N, and M is an integer greater than or equal to a ratio of the first task load to the first threshold; and the electronic device determines that an integer greater than or equal to M is N.

In the foregoing embodiments, when the render tree is split, a minimum quantity of render sub-trees that need to be obtained through splitting may be first determined, and then a manner of splitting the render tree is determined. The quantity of render sub-trees that need to be obtained through splitting may be determined by using the threshold and the task load of the render tree.

With reference to some embodiments of the first aspect, in some embodiments, that the electronic device determines a first task load specifically includes: The electronic device determines a task load of the drawing operation on the first render tree, to determine the first task load.

In the foregoing embodiments, the first task load may be determined in a plurality of manners.

With reference to some embodiments of the first aspect, in some embodiments, the N render sub-trees include a second render tree and a third render tree, a difference between a second task load and a third task load is less than a difference threshold, the second task load is a task load of the second render tree, the second task load is used to measure consumed time or a computing amount for converting the second render tree into a rendering instruction, the third task load is a task load of the third render tree, and the third task load is used to measure consumed time or a computing amount for converting the third render tree into a rendering instruction.

In the foregoing embodiments, after the minimum quantity of render sub-trees that need to be obtained through splitting is determined and the corresponding quantity of render sub-trees are obtained through splitting, the render sub-trees may be further split, so that a task load of each render sub-tree is less than the threshold.

With reference to some embodiments of the first aspect, in some embodiments, that the electronic device splits the first render tree to obtain N render sub-trees specifically includes: The electronic device determines that a root render node of the first render tree has N child nodes, where the child nodes are render nodes directly connected to the root render node; and the electronic device splits the first render tree into the N render sub-trees.

In the foregoing embodiments, a plurality of render sub-trees may be obtained through splitting based on a data structure of the render tree.

With reference to some embodiments of the first aspect, in some embodiments, that the electronic device splits the first render tree to obtain N render sub-trees specifically includes: The electronic device divides the interface of the first application into N areas; and the electronic device splits the first render tree based on the N areas to obtain the N render sub-trees, where the N render sub-trees are in one-to-one correspondence with the N areas.

In the foregoing embodiments, the interface may be first divided into the N areas, and then the render tree is split based on the areas, to obtain the N render sub-trees.

With reference to some embodiments of the first aspect, in some embodiments, that the electronic device splits the first render tree to obtain N render sub-trees specifically includes: The electronic device determines a first task load, where the first task load is a task load of the first render tree, the first task load is used to measure consumed time or a computing amount for converting the first render tree into the rendering instruction, and the first task load is greater than a first threshold; the electronic device determines that a root render node of the first render tree has K child nodes, where K is less than N; the electronic device splits the first render tree into K render sub-trees; and after the electronic device determines that a task load of a fourth render tree is greater than the first threshold, the electronic device splits the fourth render tree to obtain N-K+1 render sub-trees, where the K render sub-trees include the fourth render tree, and a task load of each of the N render sub-trees is less than the first threshold.

In the foregoing embodiments, the render tree may be split and the render sub-tree may be split, so that a task load of each render sub-tree is less than the threshold, to ensure that duration of converting the render sub-tree into a render instruction does not time out, so as to ensure timely generation of the interface.

With reference to some embodiments of the first aspect, in some embodiments, that the electronic device concurrently converts the N render sub-trees into a first rendering instruction specifically includes: The electronic device respectively fills, into N buffers through N threads, instructions converted from the N render sub-trees; and the electronic device submits the instructions in the N buffers to a first buffer, where the instructions in the first buffer are the first rendering instruction.

In the foregoing embodiments, after the plurality of render sub-trees are converted into a plurality of rendering instructions, the rendering instructions further need to be combined into one buffer, and the instructions in the buffer are submitted to a GPU to drive the GPU to generate the interface.

According to a second aspect, an embodiment of this application provides an interface generation method, applied to an electronic device on which a first application runs, where the method includes: The electronic device generates a first render tree through a first process, where the first render tree includes a drawing operation used to generate a frame of interface of the first process; the electronic device splits the first render tree into a second render tree and a third render tree, where the second render tree includes a part of the drawing operation on the first render tree, the third render tree includes a part of the drawing operation on the first render tree, and the second render tree is different from the third render tree; the electronic device converts the second render tree into a first rendering instruction through a first thread, where the first rendering instruction is stored in a first buffer, and a rendering instruction is an instruction in a rendering engine, an image processing library, or a GPU driver; the electronic device converts the third render tree into a second rendering instruction through a second thread, where the second instruction is stored in a second buffer; and the electronic device generates the frame of interface of the first process based on the first rendering instruction and the second rendering instruction.

In the foregoing embodiment, the electronic device may split a render tree generated by a process into a plurality of render trees, generate a plurality of rendering instructions through different threads, and finally generate one frame of interface based on the plurality of rendering instructions. Because the threads are concurrent, duration of converting the render tree into the rendering instructions can be reduced.

With reference to some embodiments of the second aspect, in some embodiments, the electronic device determines a first task load, where the first task load is a task load of the first render tree, the first task load is used to measure consumed time or a computing amount for converting the first render tree into the rendering instruction, and the first task load is greater than a first threshold.

In the foregoing embodiments, it is considered that when the task load of the render tree is greater than the threshold, the time for converting the render tree into the rendering instruction is long. Therefore, the render tree is split into the plurality of render sub-trees only in this case, to reduce the duration. When the task load of the render tree is less than the threshold, the render tree may not be split.

With reference to some embodiments of the second aspect, in some embodiments, that the electronic device generates the frame of interface of the first process based on the first instruction and the second instruction specifically includes: The electronic device submits the instruction in the first buffer and the rendering instruction in the second buffer to a third buffer, where the first rendering instruction is located in the first buffer held by the first thread, and the second rendering instruction is located in the second buffer held by the second thread; and the electronic device generates the frame of interface of the first process based on the third buffer.

In the foregoing embodiments, the electronic device may submit rendering instructions in a plurality of buffers to one buffer, to drive a GPU to generate the interface.

With reference to some embodiments of the second aspect, in some embodiments, the third buffer is the second buffer, or the third buffer is the first buffer.

According to a third aspect, an embodiment of this application provides an interface generation method, applied to an electronic device on which a first application runs, where the method includes: The electronic device generates a first render tree, where the first render tree includes a drawing operation used to generate a frame of interface of the first application; the electronic device determines a first task load, where the first task load is a task load of the first render tree, the first task load is used to measure consumed time or a computing amount for converting the first render tree into a rendering instruction, the first task load is greater than a first threshold, and a rendering instruction is an instruction in a rendering engine, an image processing library, or a GPU driver; if the first task load is greater than the first threshold, the electronic device changes a configured working frequency of a CPU from a first frequency to a second frequency, where the second frequency is higher than the first frequency; the electronic device generates the frame of interface of the first application based on the first render tree; and in the process in which the electronic device generates the frame of interface of the first application, the electronic device works at the second frequency.

In the foregoing embodiment, the electronic device may determine, based on a value relationship between the task load of the render tree and the threshold, whether to adjust the frequency of the CPU. If the task load of the render tree is greater than the threshold, the electronic device works at a higher frequency, so that the render tree can be converted into the rendering instruction in time.

With reference to some embodiments of the third aspect, in some embodiments, that the electronic device generates the frame of interface of the first application based on the first render tree specifically includes: The electronic device splits the first render tree to obtain N render sub-trees, where N is an integer greater than 1; the electronic device concurrently converts the N render sub-trees into a first rendering instruction; and the electronic device generates the frame of interface of the first application based on the first rendering instruction.

In the foregoing embodiments, the electronic device may further split the render tree into a plurality of render sub-trees, and concurrently convert the plurality of render sub-trees into the rendering instruction, to reduce duration of converting the render tree into the rendering instruction.

According to a fourth aspect, an embodiment of this application provides an interface generation method, applied to an electronic device on which a first application runs, where the method includes: The electronic device generates a first render tree, where the first render tree includes a drawing operation used to generate a frame of interface of the first application; the electronic device transverse different parts of the first render tree through a plurality of different threads to generate a first rendering instruction, where a rendering instruction is an instruction in a rendering engine, an image processing library, or a GPU driver; and the electronic device generates the frame of interface of the first application based on the first rendering instruction.

In the foregoing embodiment, the electronic device traverses the render tree in different sequences, and concurrently converts the render tree into the rendering instruction through the plurality of threads, to reduce a delay in converting the render tree into the rendering instruction, and ensure that the electronic device can generate the interface in time.

With reference to some embodiments of the fourth aspect, in some embodiments, before the electronic device transverses the first render tree in different sequences through the plurality of different threads to generate the first instruction, the method further includes: The electronic device determines a first task load, where the first task load is a task load of the first render tree, and the first task load is used to measure consumed time or a computing amount for converting the first render tree into the first rendering instruction; and the electronic device determines that the first task load is greater than a first threshold.

In the foregoing embodiments, it is considered that when the task load of the render tree is greater than the threshold, the time for converting the render tree into the rendering instruction is long. Therefore, in this case, the render tree is converted into the render instruction through the plurality of threads concurrently, to reduce conversion duration.

With reference to some embodiments of the fourth aspect, in some embodiments, that the electronic device transverses the first render tree in different sequences through a plurality of different threads to generate a first instruction specifically includes: The electronic device transverses a first part of the first render tree through a first thread, and stores a generated second rendering instruction in a first buffer; the electronic device transverses a second part of the first render tree through a second thread, and stores a generated third rendering instruction in a second buffer; and the electronic device submits the rendering instruction in the first buffer and the rendering instruction in the second buffer to a third buffer to obtain the first rendering instruction.

In the foregoing embodiments, rendering instructions generated by different threads through conversion may be located in different buffers, and finally rendering instructions in the different buffers are submitted to a same buffer, to drive a GPU to generate the interface.

With reference to some embodiments of the fourth aspect, in some embodiments, that the electronic device submits the rendering instruction in the first buffer and the rendering instruction in the second buffer to a third buffer to obtain the first rendering instruction specifically includes: The rendering instruction in the first buffer includes the second rendering instruction and the third rendering instruction, and the instruction in the second buffer includes a fourth rendering instruction; and an arrangement sequence of the instructions in the third buffer is sequentially the second rendering instruction, the fourth rendering instruction, and the third rendering instruction.

In the foregoing embodiments, when rendering instructions in different buffers are submitted to a same buffer, a sequence of the rendering instructions may be adjusted, to restore dependency of a render node.

According to a fifth aspect, an embodiment of this application provides an electronic device, where the electronic device includes one or more processors and a memory, the memory is coupled to the one or more processors, the memory is configured to store computer program code, the computer program code includes computer instructions, and the one or more processors invoke the computer instructions to enable the electronic device to perform the following operations: The electronic device generates a first render tree, where the first render tree includes a drawing operation used to generate a frame of interface of the first application; the electronic device splits the first render tree to obtain N render sub-trees, where N is greater than 1; the electronic device concurrently converts the N render sub-trees into a first rendering instruction, where a rendering instruction is an instruction in a rendering engine, an image processing library, or a GPU driver; and the electronic device generates the frame of interface of the first application based on the first rendering instruction.

With reference to some embodiments of the fifth aspect, in some embodiments, the one or more processors are specifically configured to invoke the computer instructions to enable the electronic device to perform the following operations: The electronic device determines a first task load, where the first task load is a task load of the first render tree, and the first task load indicates consumed time or a computing amount for converting the first render tree into the first rendering instruction; and in response to determining, by the electronic device, that the first task load is greater than a first threshold, the electronic device splits the first render tree to obtain the N render sub-trees.

With reference to some embodiments of the fifth aspect, in some embodiments, the one or more processors are further configured to invoke the computer instructions to enable the electronic device to perform the following operations: The electronic device determines M based on the first task load and the first threshold, where M is less than or equal to N, and M is an integer greater than or equal to a ratio of the first task load to the first threshold; and the electronic device determines that an integer greater than or equal to M is N.

With reference to some embodiments of the fifth aspect, in some embodiments, the one or more processors are specifically configured to invoke the computer instructions to enable the electronic device to perform the following operation: The electronic device determines a task load of the drawing operation on the first render tree, to determine the first task load.

With reference to some embodiments of the fifth aspect, in some embodiments, the N render sub-trees include a second render tree and a third render tree, a difference between a second task load and a third task load is less than a difference threshold, the second task load is a task load of the second render tree, the second task load is used to measure consumed time or a computing amount for converting the second render tree into a rendering instruction, the third task load is a task load of the third render tree, and the third task load is used to measure consumed time or a computing amount for converting the third render tree into a rendering instruction.

With reference to some embodiments of the fifth aspect, in some embodiments, the one or more processors are specifically configured to invoke the computer instructions to enable the electronic device to perform the following operations: The electronic device determines that a root render node of the first render tree has N child nodes, where the child nodes are render nodes directly connected to the root render node; and the electronic device splits the first render tree into the N render sub-trees.

With reference to some embodiments of the fifth aspect, in some embodiments, the one or more processors are specifically configured to invoke the computer instructions to enable the electronic device to perform the following operations: The electronic device divides the interface of the first application into N areas; and the electronic device splits the first render tree based on the N areas to obtain the N render sub-trees, where the N render sub-trees are in one-to-one correspondence with the N areas.

With reference to some embodiments of the fifth aspect, in some embodiments, the one or more processors are specifically configured to invoke the computer instructions to enable the electronic device to perform the following operations: The electronic device determines a first task load, where the first task load is a task load of the first render tree, the first task load is used to measure consumed time or a computing amount for converting the first render tree into the rendering instruction, and the first task load is greater than a first threshold; the electronic device determines that a root render node of the first render tree has K child nodes, where K is less than N; the electronic device splits the first render tree into K render sub-trees; and after the electronic device determines that a task load of a fifth render tree is greater than the first threshold, the electronic device splits the fifth render tree to obtain N-K+1 render sub-trees, where the K render sub-trees include the fifth render tree, and a task load of each of the N render sub-trees is less than the first threshold.

With reference to some embodiments of the fifth aspect, in some embodiments, the one or more processors are specifically configured to invoke the computer instructions to enable the electronic device to perform the following operations: The electronic device respectively fills, into N buffers through N threads, instructions converted from the N render sub-trees; and the electronic device submits the instructions in the N buffers to a first buffer, where the instructions in the first buffer are the first rendering instruction.

According to a sixth aspect, an embodiment of this application provides an electronic device, where the electronic device includes one or more processors and a memory, the memory is coupled to the one or more processors, the memory is configured to store computer program code, the computer program code includes computer instructions, and the one or more processors invoke the computer instructions to enable the electronic device to perform the following operations: The electronic device generates a first render tree through a first process, where the first render tree includes a drawing operation used to generate a frame of interface of the first process; the electronic device splits the first render tree into a second render tree and a third render tree, where the second render tree includes a part of the drawing operation on the first render tree, the third render tree includes a part of the drawing operation on the first render tree, and the second render tree is different from the third render tree; the electronic device converts the second render tree into a first rendering instruction through a first thread, where the first rendering instruction is stored in a first buffer, and a rendering instruction is an instruction in a rendering engine, an image processing library, or a GPU driver; the electronic device converts the third render tree into a second rendering instruction through a second thread, where the second instruction is stored in a second buffer; and the electronic device generates the frame of interface of the first process based on the first rendering instruction and the second rendering instruction.

With reference to some embodiments of the sixth aspect, in some embodiments, the one or more processors are further configured to invoke the computer instructions to enable the electronic device to perform the following operation: The electronic device determines a first task load, where the first task load is a task load of the first render tree, the first task load is used to measure consumed time or a computing amount for converting the first render tree into a rendering instruction, and the first task load is greater than a first threshold.

With reference to some embodiments of the sixth aspect, in some embodiments, the one or more processors are further configured to invoke the computer instructions to enable the electronic device to perform the following operations: The electronic device submits the instruction in the first buffer and the rendering instruction in the second buffer to a third buffer, where the first rendering instruction is located in the first buffer held by the first thread, and the second rendering instruction is located in the second buffer held by the second thread; and the electronic device generates the frame of interface of the first process based on the third buffer.

With reference to some embodiments of the sixth aspect, in some embodiments, the third buffer is the second buffer, or the third buffer is the first buffer.

According to a seventh aspect, an embodiment of this application provides an electronic device, where the electronic device includes one or more processors and a memory, the memory is coupled to the one or more processors, the memory is configured to store computer program code, the computer program code includes computer instructions, and the one or more processors invoke the computer instructions to enable the electronic device to perform the following operations: The electronic device generates a first render tree, where the first render tree includes a drawing operation used to generate a frame of interface of the first application; the electronic device determines a first task load, where the first task load is a task load of the first render tree, the first task load is used to measure consumed time or a computing amount for converting the first render tree into a rendering instruction, the first task load is greater than a first threshold, and a rendering instruction is an instruction in a rendering engine, an image processing library, or a GPU driver; if the first task load is greater than the first threshold, the electronic device changes a configured working frequency of a CPU from a first frequency to a second frequency, where the second frequency is higher than the first frequency; the electronic device generates the frame of interface of the first application based on the first render tree; and in the process in which the electronic device generates the frame of interface of the first application, the electronic device works at the second frequency.

With reference to some embodiments of the seventh aspect, in some embodiments, the one or more processors are specifically configured to invoke the computer instructions to enable the electronic device to perform the following operations: The electronic device splits the first render tree to obtain N render sub-trees, where N is an integer greater than 1; the electronic device concurrently converts the N render sub-trees into a first rendering instruction; and the electronic device generates the frame of interface of the first application based on the first rendering instruction.

According to an eighth aspect, an embodiment of this application provides an electronic device, where the electronic device includes one or more processors and a memory, the memory is coupled to the one or more processors, the memory is configured to store computer program code, the computer program code includes computer instructions, and the one or more processors invoke the computer instructions to enable the electronic device to perform the following operations: The electronic device generates a first render tree, where the first render tree includes a drawing operation used to generate a frame of interface of the first application; the electronic device transverse different parts of the first render tree through a plurality of different threads to generate a first rendering instruction, where a rendering instruction is an instruction in a rendering engine, an image processing library, or a GPU driver; and the electronic device generates the frame of interface of the first application based on the first rendering instruction.

With reference to some embodiments of the eighth aspect, in some embodiments, the one or more processors are further configured to invoke the computer instructions to enable the electronic device to perform the following operations: The electronic device determines a first task load, where the first task load is a task load of the first render tree, and the first task load is used to measure consumed time or a computing amount for converting the first render tree into the first rendering instruction; and the electronic device determines that the first task load is greater than a first threshold.

With reference to some embodiments of the eighth aspect, in some embodiments, the one or more processors are specifically configured to invoke the computer instructions to enable the electronic device to perform the following operations: The electronic device transverses a first part of the first render tree through a first thread, and stores a generated second rendering instruction in a first buffer; the electronic device transverses a second part of the first render tree through a second thread, and stores a generated third rendering instruction in a second buffer; and the electronic device submits the rendering instruction in the first buffer and the rendering instruction in the second buffer to a third buffer to obtain the first rendering instruction.

With reference to some embodiments of the eighth aspect, in some embodiments, the one or more processors are specifically configured to invoke the computer instructions to enable the electronic device to perform the following operations: The rendering instruction in the first buffer includes the second rendering instruction and the third rendering instruction, and the instruction in the second buffer includes a fourth rendering instruction; and an arrangement sequence of the instructions in the third buffer is sequentially the second rendering instruction, the fourth rendering instruction, and the third rendering instruction.

According to a ninth aspect, an embodiment of this application provides a chip system. The chip system is used in an electronic device, the chip system includes one or more processors, and the processor is configured to invoke computer instructions, so that the electronic device performs the method described in any one of the first aspect, the second aspect, the third aspect, the fourth aspect, the possible implementations of the first aspect, the possible implementations of the second aspect, the possible implementations of the third aspect, and the possible implementations of the fourth aspect.

According to a tenth aspect, an embodiment of this application provides a computer program product including instructions. When the computer program product runs on an electronic device, the electronic device is enabled to perform the method described in any one of the first aspect, the second aspect, the third aspect, the fourth aspect, the possible implementations of the first aspect, the possible implementations of the second aspect, the possible implementations of the third aspect, and the possible implementations of the fourth aspect.

According to an eleventh aspect, an embodiment of this application provides a computer-readable storage medium, including instructions. When the instructions are run on an electronic device, the electronic device is enabled to perform the method described in any one of the first aspect, the second aspect, the third aspect, the fourth aspect, the possible implementations of the first aspect, the possible implementations of the second aspect, the possible implementations of the third aspect, and the possible implementations of the fourth aspect.

It may be understood that the electronic devices provided in the fifth aspect, the sixth aspect, the seventh aspect, and the eighth aspect, the chip system provided in the ninth aspect, the computer program product provided in the tenth aspect, and the computer storage medium provided in the eleventh aspect are all configured to perform the methods provided in embodiments of this application. Therefore, for beneficial effects that can be achieved by the electronic device, the chip system, the computer program product, and the computer-readable storage medium, refer to beneficial effects in the corresponding methods. Details are not described herein again.

**BRIEF DESCRIPTION OF DRAWINGS**

FIG. 1 is an example diagram of generating a bitmap by an application according to an embodiment of this application;

FIG. 2 is an example diagram of a process in which an electronic device generates an interface according to an embodiment of this application;

FIG. 3 is an example diagram of an interface generation method according to an embodiment of this application;

FIG. 4A to FIG. 4C are an example diagram of determining a task load of a render tree according to an embodiment of this application;

FIG. 5A and FIG. 5B each are an example diagram of splitting a render tree according to an embodiment of this application;

FIG. 6A and FIG. 6B each are an example diagram of splitting a render tree according to an embodiment of this application;

FIG. 7A to FIG. 7C are another example diagram of splitting a render tree according to an embodiment of this application;

FIG. 8 is an example diagram of concurrently converting a render tree into a GPU instruction according to an embodiment of this application;

FIG. 9A and FIG. 9B each are another example diagram of a process in which an electronic device generates an interface according to an embodiment of this application;

FIG. 10 is another example diagram of a procedure of an interface generation method according to an embodiment of this application;

FIG. 11 is an example diagram of adjusting a computing capability of a CPU based on a task load of a render tree according to an embodiment of this application;

FIG. 12 is another example diagram of an interface generation method according to an embodiment of this application;

FIG. 13 is an example diagram in which render threads traverse a render tree in different sequences according to an embodiment of this application;

FIG. 14 is an example diagram of submitting a GPU instruction to an instruction queue according to an embodiment of this application;

FIG. 15 is an example diagram of a hardware structure of an electronic device according to an embodiment of this application; and

FIG. 16 is an example diagram of a software structure of an electronic device according to an embodiment of this application.

**DESCRIPTION OF EMBODIMENTS**

Terms used in the following embodiments of this application are merely intended to describe specific embodiments, but are not intended to limit this application. As used in the specification and the appended claims of this application, singular expressions "a", "one", "the", "the foregoing", "such a", and "this" are also intended to include plural expressions unless otherwise clearly indicated in the context. It should be further understood that the term "and/or" used in this application indicates and includes any or all possible combinations of one or more listed items.

The following terms "first" and "second" are merely used for description, and shall not be understood as an indication or implication of relative importance or implicit indication of a quantity of indicated technical features. Therefore, a feature limited by "first" or "second" may explicitly or implicitly include one or more features. In descriptions of embodiments of this application, unless otherwise specified, "a plurality of" means two or more.

The term "user interface (user interface, UI)" in the following embodiments of this application is a medium interface for interaction and information exchange between an application or an operating system and a user, and implements conversion between an internal form of information and a form acceptable to the user. The user interface is source code written in a specific computer language like Java or an extensible markup language (extensible markup language, XML). Interface source code is parsed and rendered on an electronic device, and is finally presented as content that can be identified by the user. A frequently-used representation form of the user interface is a graphical user interface (graphical user interface, GUI), which is a user interface that is displayed in a graphical manner and that is related to a computer operation. The user interface may be a visual interface element like a text, an icon, a button, a menu, a tab, a text box, a dialog box, a status bar, a navigation bar, or a widget that is displayed on a display of the electronic device.

For ease of understanding, terms and concepts related to embodiments of this application are first described below. Terms used in implementations of the present invention are merely intended to explain specific embodiments of the present invention, and are not intended to limit the present invention.

An interface is used as a medium interface for interaction and information exchange between an application and a user. Each time a vertical synchronization signal arrives, an electronic device needs to generate an application interface for a foreground application. A frequency of the vertical synchronization signal is related to a refresh rate of a screen of the electronic device. For example, the frequency of the vertical synchronization signal is the same as the refresh rate of the screen of the electronic device.

To be specific, each time before content displayed on the screen is refreshed, the electronic device needs to generate an application interface for the foreground application, to present the newly generated interface of the application to the user when the screen is refreshed.

When the electronic device generates an interface of an application, the application needs to perform rendering to generate a bitmap (bitmap), and transfer the bitmap of the application to a surface flinger (SurfaceFlinger). To be specific, the application acts as a producer to draw and generate the bitmap, and stores the bitmap in a buffer queue (BufferQueue) provided by the surface flinger. The surface flinger acts as a consumer to continuously obtain the bitmap generated by the application from BufferQueue. The bitmap is located on a surface generated by the application, and the surface is filled in BufferQueue.

After the surface flinger obtains a bitmap of a visible application, the surface flinger and a hardware composer (Hardware Composer, HWC) determine a layer composition manner in which a bitmap is used as a layer (layer).

After the surface flinger and/or the hardware composer perform/performs bitmap composition, the surface flinger and/or the hardware composer fill/fills a composed bitmap into a frame buffer (Frame Buffer) and transfers the composed bitmap to a display subsystem (Display Subsystem, DSS). After obtaining the composed bitmap, the DSS may display the composed bitmap on the screen. The frame buffer may be an on-screen buffer (on-screenbuffer). The bitmap may also be referred to as a layer on the surface flinger.

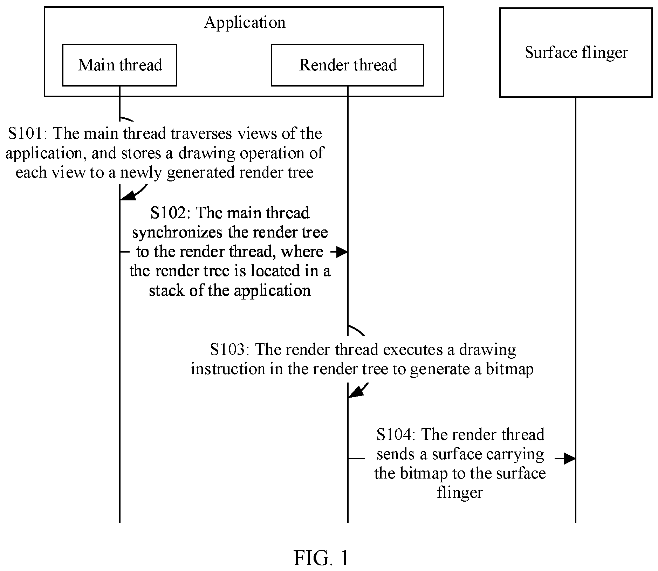

A process of generating the bitmap by the application is shown in FIG. 1.

FIG. 1 is an example diagram of generating a bitmap by an application according to an embodiment of this application.

As shown in FIG. 1, after receiving a vertical synchronization signal (Vsync), the application starts to generate a bitmap. Specifically, there may be three steps, which are respectively step S101, step S102, and step S103.

S101: A main thread traverses views of the application, and stores a drawing operation of each view to a newly generated render tree.

The main thread (UI thread, UI Thread) makes a view hierarchy (viewhierarchy) ineffective. The UI thread traverses the views (views) of the application through a measurement method call (measure()), a layout method call (layout()), and a drawing method call (draw()), determines and stores the drawing operation of each view, and records the view and the drawing operation (for example, drawline) related to the view to a drawing instruction list (display list) of a render node (RenderNode) of the render tree. Data stored in the drawing instruction list may be a drawing operation structure (DrawOP or DrawListOP).

The view is a basic element that forms an application interface, and one control on the interface may correspond to one or more views.

Optionally, in some implementations of this application, in the drawing method call, the UI thread of the application further reads content carried in a view to a memory, for example, an image carried in an image view (imageview), or a text carried in a text view (textview). Alternatively, in the drawing method call, the UI thread of the application determines an operation of reading content carried in a view to a memory, and records the operation into the drawing instruction list. The drawing operation structure in the drawing instruction list may also be referred to as a drawing instruction.

The drawing operation structure is a data structure, and is used to draw a graph, for example, draw a line, draw a rectangle, or draw a text. When render nodes are traversed, the drawing operation structure is converted, through a rendering engine, into an API call of an image processing library, for example, an interface call in an OpenGL ES library, a Vulkan library, or a Metal library. For example, in the rendering engine (Skia library), drawline is encapsulated as DrawLineOp. DrawLineOp is a data structure, and the data structure includes drawn data, for example, information such as a length and a width of a line. DrawLineOp is further encapsulated as an interface call in the OpenGL ES library, the Vulkan library, or the Metal library, to obtain a GPU instruction. In the following, an interface call in the Skia library, the interface call in the OpenGL ES library, the interface call in the Vulkan library, and/or the interface call in the Metal library are collectively referred to as a rendering instruction. In other words, the render tree is converted into a rendering instruction by the render thread, and further converted into a GPU instruction that can be identified and processed by a GPU. The OpenGL ES library, the Vulkan library, and the Metal library may be collectively referred to as an image processing library or a graphics rendering library. In a process of generating a frame of interface, the electronic device generates a rendering instruction by using the OpenGL ES library, the Vulkan library, or the Metal library. The image processing library provides a graphics rendering API, driver support, and the like.

DrawOP may be stored, in a form of a chained data structure, in a stack of the application.

The drawing instruction list may be a buffer. The buffer records all drawing operation structures included in a frame of interface of the application or identifiers, such as addresses and sequence numbers, of all drawing operations included in a frame of interface of the application. When the application has a plurality of windows or is displayed in different display (display) areas, a plurality of render trees corresponding to the plurality of windows need to be independently generated.

The render tree is generated by the UI thread, and is used to generate a data structure of an application interface. The render tree may include a plurality of render nodes, and each render node includes a rendering property and a drawing instruction list. The render tree records a part or all of information for generating a frame of interface of the application.

Optionally, in some implementations of this application, the UI thread may traverse only views of a dirty area (which may also be referred to as an area that needs to be redrawn), to generate a differential render tree. After the differential render tree is transferred/synchronized to the render thread, the render thread may determine, based on the differential render tree and a render tree used for rendering of a previous frame, a render tree that needs to be used for rendering of a current frame of interface.

S102: The main thread synchronizes the render tree to the render thread, where the render tree is located in the stack of the application.

The UI thread transfers/synchronizes the render tree to the render thread (Render Thread), where the render tree is located in a stack (stack) of a process corresponding to the application.

S103: The render thread executes a drawing instruction in the render tree to generate a bitmap.

The render thread first obtains a hardware canvas (HardwareCanvas), and then performs, on the hardware canvas, a drawing operation on the render tree, to generate the bitmap. The hardware canvas is located on a surface held by the application, and the surface carries the bitmap or data that is in another format and that is used to store image information.

S104: The render thread sends the surface carrying the bitmap to a surface flinger.

The render thread sends the generated bitmap to the surface flinger through the surface, to participate in layer composition.

Step S101 may be considered as a construction phase, and is mainly responsible for determining properties such as a size, a location, and transparency of each view in the application. For example, drawLine in the view may be encapsulated as DrawLineOp during construction, where DrawLineOp includes drawn data such as a length and a width of a line, may further include an interface call corresponding to DrawLineOp of the underlying graphics processing library, and is used to call the underlying graphics library to generate a bitmap in a rendering phase.

Similarly, it may be considered that step S103 is the rendering phase and is mainly responsible for traversing the render nodes of the render tree, and performing the drawing operation on each render node, to generate the bitmap on the hardware canvas. In this process, the render thread calls the underlying graphics processing library like the OpenGL ES library, the Vulkan library, or the Metal library, and further calls the GPU to complete rendering to generate the bitmap.

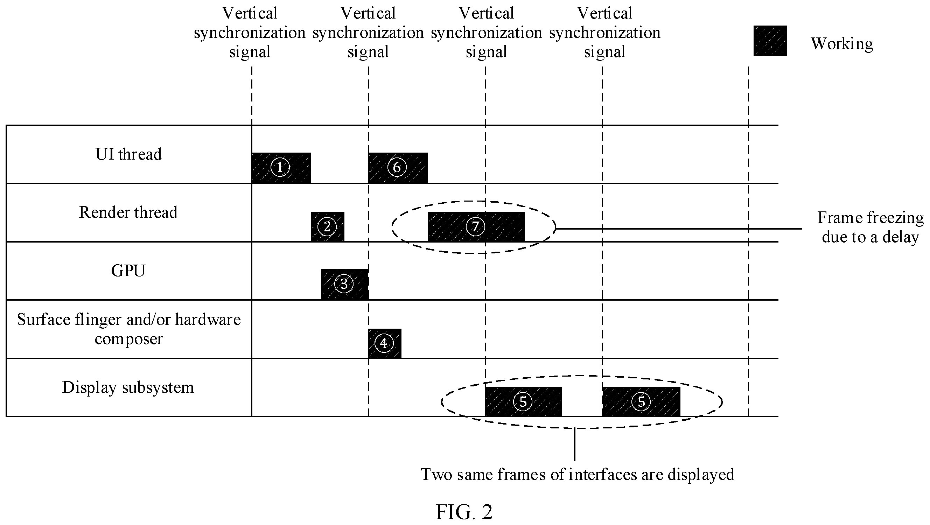

FIG. 2 is an example diagram of a process in which an electronic device generates an interface according to an embodiment of this application.

As shown in FIG. 2, a process of generating a first frame of interface is ①, ②, ③, ④, and ⑤ in FIG. 2, and a process of generating a second frame of interface is ⑥, ⑦, and ⑤ in FIG. 2.

The process in which the electronic device generates the first frame of interface includes: After a UI thread of an application receives a vertical synchronization signal, the UI thread of the application generates a render tree, as shown in ① in FIG. 2. After receiving the render tree, a render thread of the application needs to convert a drawing instruction list and a rendering property in the render tree into a GPU instruction, for example, a Vulkan library instruction, an OpenGL ES library instruction, or a Metal instruction that can be identified and processed by a GPU driver, as shown in ② in FIG. 2. After receiving the GPU instruction, a GPU or the GPU driver generates a bitmap, as shown in ③ in FIG. 2. A surface flinger and/or a hardware composer receive/receives the bitmap, and performs layer composition by using the bitmap as a layer, as shown in ④ in FIG. 2. A display subsystem receives a composed bitmap from the surface flinger and/or the hardware composer, and then sends the composed bitmap for display, as shown in ⑤ in FIG. 2.

The process in which the electronic device generates the second frame of interface includes: After the UI thread of the application receives a vertical synchronization signal, the UI thread of the application generates a render tree, as shown in ⑥ in FIG. 2. After receiving the render tree, the render thread of the application needs to convert a drawing instruction list and a rendering property in the render tree into a GPU instruction, for example, a Vulkan library instruction, an OpenGL ES library instruction, or a Metal instruction that can be identified and processed by the GPU driver, as shown in ⑦ in FIG. 2.

However, in the process in which the electronic device generates the second frame of interface, because it takes a long time for the render thread to convert the drawing instruction list and the rendering property in the render tree into an instruction that can be identified and processed by the GPU, the bitmap cannot be transferred to the surface flinger and/or the hardware composer in time. After receiving the vertical synchronization signal, the surface flinger and/or the hardware composer perform/performs layer composition for display. However, because the surface flinger and/or the hardware composer do/does not receive an interface of the application on the second frame of interface, the surface flinger and/or the hardware composer use/uses an interface of the application on the first frame of interface as the interface of the application on the second frame of interface to perform layer composition for display, as shown in ⑤ in FIG. 2.

It is clear that, because the render thread fails to convert the rendering property and the drawing instruction list in the render tree into the GPU instruction in time, the GPU cannot generate the bitmap in time, and consequently, frame freezing occurs on the interface of the application.

In different scenarios, a reason why the render thread cannot convert the render tree into the GPU instruction in time may be summarized as follows: A load of the render tree corresponding to the interface of the application that needs to be generated does not match a computing capability of the electronic device. The load of the render tree may be represented in a plurality of manners. This is not limited herein. For example, the render tree is converted into a computing amount of a GPU instruction, memory usage of the render tree, or the like. That the load of the render tree matches the computing capability of the electronic device means that: When the computing capability of the electronic device is within a range, the render tree may always be converted into the GPU instruction within preset duration. On the contrary, when duration in which the render tree is converted into the GPU instruction exceeds the preset duration, frame freezing or frame loss occurs on the interface of the application. In this case, the load of the render tree does not match the computing capability of the electronic device.

Optionally, in some implementations of this application, a frequency of a CPU may be increased, to improve the computing capability of the electronic device, so that the render thread can always convert the render tree into the GPU instruction in time.

However, increasing the frequency of the CPU increases power consumption of the electronic device, and reduces an energy efficiency ratio of generating one frame of interface by the electronic device. Further, before the render thread converts the render tree into the GPU instruction, the render thread cannot determine a load of the operation of converting the render tree into the GPU instruction, and cannot select an appropriate frequency of the CPU.

In view of this, embodiments of this application provide an interface generation method and an electronic device.

According to the interface generation method provided in embodiments of this application, a load scoring model may be built in an electronic device. In a process in which a UI thread of an application generates a render tree, or after the UI thread of the application generates the render tree, the UI thread or a render thread of the application or a unified rendering process may determine, based on the load scoring model, a load for converting the render tree into a GPU instruction, and further, the electronic device selects an appropriate frequency of the CPU based on the load.

The unified rendering process (unirender) is a process independent of the application, and is configured to receive render trees generated by UI threads of different applications. The application and the unified rendering process complete data interaction through inter-process communication (inter-process communication, IPC). For specific content of the unified rendering process, refer to Patent Application No. 2021114105136, entitled "INTERFACE GENERATION METHOD AND ELECTRONIC DEVICE", and Patent Application No. 202111410643X, entitled "INTERFACE GENERATION METHOD AND ELECTRONIC DEVICE". Details are not described herein again.

It may be understood that, according to the interface generation method provided in embodiments of this application, the load for converting the render tree into the GPU instruction is determined by using the load scoring model, to select the appropriate frequency of the CPU, so that the render thread or the unified rendering process can complete conversion of the GPU instruction in time, and a power consumption increase caused by a CPU frequency increase is reduced.

Optionally, in some implementations of this application, according to the interface generation method provided in embodiments of this application, the render tree of the application may be split, and a plurality of render trees obtained through splitting are separately converted into GPU instructions by different threads.

Optionally, in some implementations of this application, according to the interface generation method provided in embodiments of this application, a render tree traversal sequence may be modified, so that a plurality of threads may simultaneously traverse one render tree to generate GPU instructions.

It may be understood that, according to the interface generation method provided in embodiments of this application, time consumed for converting the render tree into the GPU instruction is reduced in a multi-thread concurrent manner, to reduce a probability of frame freezing on an interface. In addition, when a cost of multi-thread concurrency is not considered, if a low-frequency energy efficiency ratio of a CPU of the electronic device is high, the render tree may be converted into the GPU instruction in the multi-thread concurrent manner after a frequency is reduced, so that energy efficiency of generating one frame of interface can be improved without increasing time consumed for generating the frame of interface.

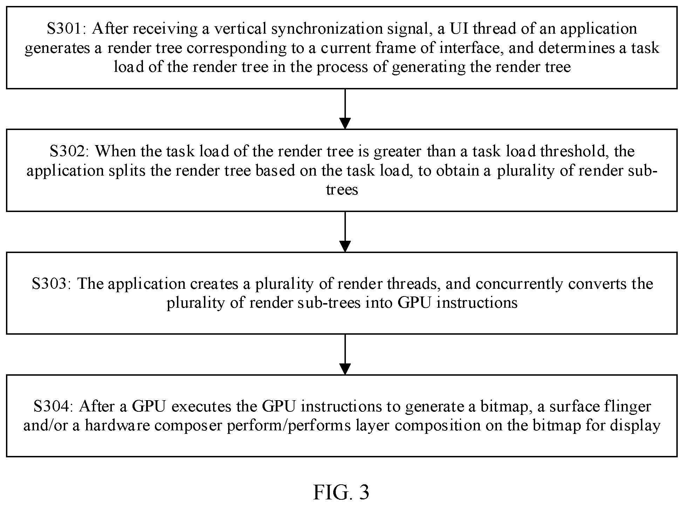

With reference to content shown in FIG. 3, the following describes examples of the interface generation method and the electronic device provided in embodiments of this application.

FIG. 3 is an example schematic flowchart of an interface generation method according to an embodiment of this application.

S301: After receiving a vertical synchronization signal, a UI thread of an application generates a render tree corresponding to a current frame of interface, and determines a task load of the render tree in the process of generating the render tree.

For generating, by the UI thread of the application, the render tree corresponding to the current frame of interface, refer to the foregoing text descriptions in FIG. 1. Details are not described herein again.

In the process of generating the render tree, the UI thread of the application may determine the task load of the render tree by determining a task load of each drawing operation or drawing operation structure. The task load of the render tree is used to represent a task load of converting the render tree into a GPU instruction in the process of generating the current frame of interface.

Under a same computing capability of a CPU, if frequencies are the same, the task load of the render tree is positively correlated with consumed time for converting the render tree into the GPU instruction.

A more complex GPU instruction indicates longer consumed time for converting the render tree into the GPU instruction. In addition, a more complex GPU instruction indicates longer consumed time for a GPU to perform rendering and generate a bitmap. Therefore, it may be considered that the task load of the render tree is positively correlated with consumed time for generating the current frame of interface.

A load scoring model may be the following task model table.

A task model table may be stored locally on an electronic device or on a cloud that can be accessed by the electronic device. The task model table includes task load scores corresponding to different drawing operation structures. The task model table is shown in Table 1 and Table 2 below.

Table 1 and Table 2 are example tables of the task model table according to an embodiment of this application.

| Table 1 | |
|---|---|
| Drawing operation or drawing operation structure | Task load |
| DrawRect (parameter 1, parameter 2) (DrawRectOP) | F1 (parameter 1, parameter 2) |
| DrawImage (parameter 3, parameter 4) (DrawImageOP) | F2 (parameter 3, parameter 4) |
| ClipRect (parameter 5) | F3 (parameter 5) |

As shown in Table 1, the task model table stores a correspondence between a drawing operation or a drawing operation structure and a task load. For example, a task load corresponding to DrawRect (parameter 1, parameter 2) is F1 (parameter 1, parameter 2), a task load corresponding to DrawImage (parameter 3, parameter 4) is F2 (parameter 3, parameter 4), and a task load corresponding to ClipRect (parameter 5) is F3 (parameter 5). F1 (), F2 () and F3 () are task load computing functions corresponding to different drawing operations or drawing operation structures.

Optionally, in some embodiments of this application, the task model table may store a correspondence between a drawing operation or a drawing operation structure and consumed time for converting the drawing operation or the drawing operation structure into a GPU instruction under different CPU computing abilities, as shown in Table 2.

**Table 2**

| Drawing operation or drawing operation structure | Consumed time |
|---|---|
| DrawRect (parameter 1, parameter 2) (DrawRectOP) | T1 (CPU parameter, parameter 1, parameter 2) |
| DrawImage (parameter 3, parameter 4) (DrawImageOP) | T2 (CPU parameter, parameter 3, parameter 4) |

(continued)

| Drawing operation or drawing operation structure | Consumed time |
|---|---|
| ClipRect (parameter 5) | T3 (CPU parameter, parameter 5) |

As shown in Table 2, consumed time corresponding to DrawRect (parameter 1, parameter 2) is T1 (CPU parameter, parameter 1, parameter 2), consumed time corresponding to DrawImage (parameter 3, parameter 4) is T2 (CPU parameter, parameter 3, parameter 4), and a task load corresponding to ClipRect (parameter 5) is T3 (CPU parameter, parameter 5). T1 (), T2 () and T3 () are consumed-time computing functions corresponding to different drawing operations or drawing operation structures.

The task model table may be generated through offline testing. For example, a developer of a terminal vendor may test each drawing operation or drawing operation structure, and record consumed time or a task load, to generate the task model table.

Alternatively, the task model table may be generated and updated online. For example, when a user uses the electronic device, an operating system on the electronic device records consumed time or task loads of different drawing operations or drawing operation structures in an interface generation process, to record and update the task model table in real time. In this case, because electronic devices of a same model have different statuses, task model tables of the electronic devices of the same model may be different, and therefore, a load of a frame of interface is more accurately evaluated. A status of an electronic device may include an aging degree of the electronic device, and the like. This is not limited herein.

Optionally, in some implementations of this application, a rendering property is also used in computing of the task load. This is because, in a subsequent process of converting a drawing operation in a drawing instruction list of a render node into an interface call of an image processing library, a rendering property of the render node also acts on the drawing operation, and further affects a GPU instruction obtained through conversion.

Optionally, in some implementations of this application, an input parameter of the drawing operation may not be considered. Different drawing operations correspond to different task loads. Same drawing operations may have different input parameters, but correspond to a same task load.

Optionally, in some implementations of this application, after determining the task load of the render tree, the UI thread of the application may store the task load of the render tree as a separate parameter, and transfer the separate parameter and the render tree to a render thread or a unified rendering process.

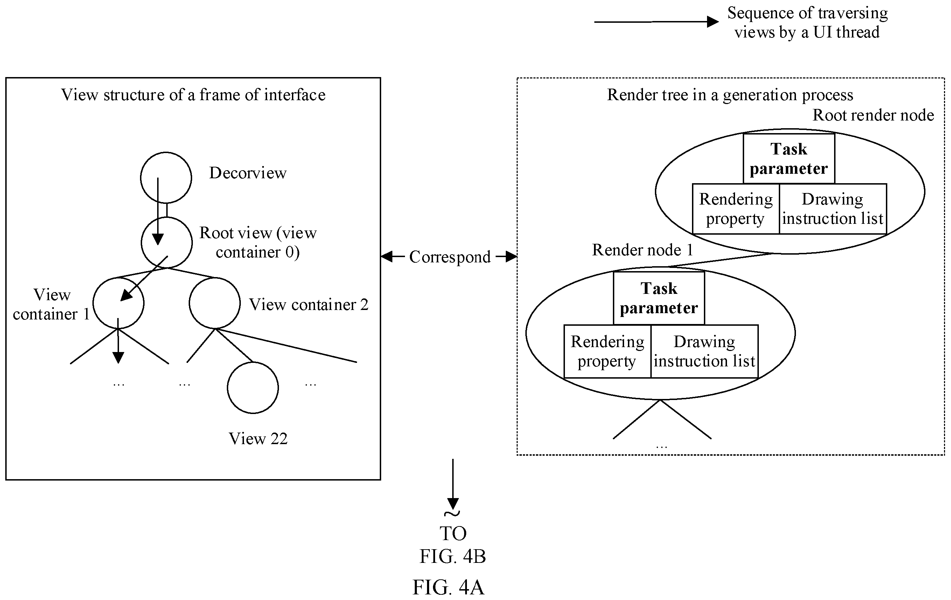

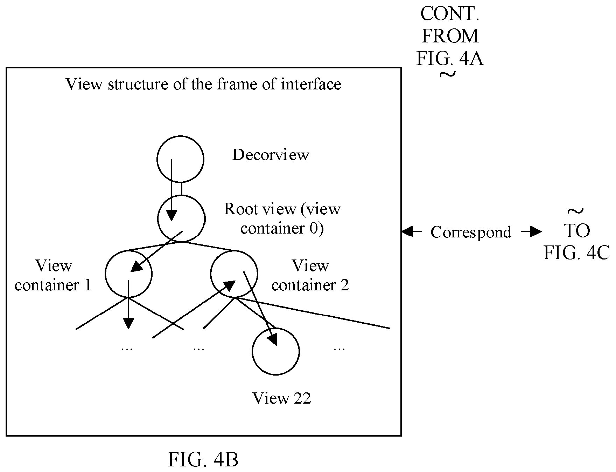

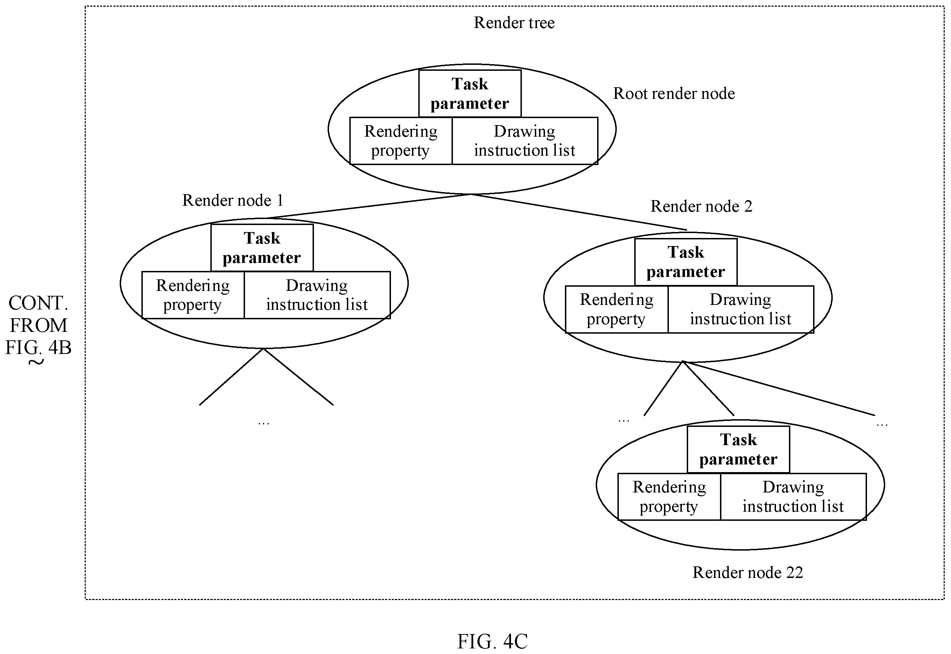

Optionally, in some implementations of this application, if the UI thread of the application determines a task load of each render node in the process of generating the render tree, the task load of each render node may be stored in the render node, as shown in FIG. 4A to FIG. 4C. A parameter used to store the task load of the render node may be referred to as a task parameter

FIG. 4A to FIG. 4C are an example diagram of determining the task load of the render tree according to an embodiment of this application.

As shown in FIG. 4A to FIG. 4C, a view structure corresponding to the current frame of interface of the application is as follows: Sub-views of a root view (a view container 0) are a view container 1 and a view container 2, the view container 1 has several sub-views, and a sub-view of the view container 2 includes a view 22.

In a process in which the UI thread of the application traverses the views, the UI thread of the application generates the render tree. In the process in which the UI thread of the application generates the render tree, the UI thread of the application determines the task load of each render node based on the task model table, and then the UI thread of the application stores the task load of each render node in a task parameter of the corresponding render node. For example, if the UI thread of the application has traversed the root view and the view container 1, the render tree in the generation process includes a root render node and a render node 1, and a task parameter is added to each of the root render node and the render node 1. In FIG. 4A to FIG. 4C, the root render node is a render node corresponding to the root view, and the render node 1 is a render node corresponding to the view container 1.

After the UI thread of the application traverses the views, each render node of the render tree includes the task parameter, and the task parameter stores the task load of the render node. In subsequent processing, the UI thread, the render thread, or the rendering process may determine the task load of the render node based on the task parameter in the render node.

Optionally, in some implementations of this application, the task parameter in the root render node of the render tree may further store the task load of the entire render tree in addition to a task load of the render node. Further, for any render node in the render tree, in addition to a task load of the render node, a task parameter of the render node may further store a task load of a render sub-tree that uses the render node as a root render node.

Optionally, in some implementations of this application, the UI thread may determine a task load of a differential render tree, and store the task load of the differential render tree in a task parameter. After the differential render tree is transferred to the render thread or the unified rendering process, the render thread or the unified rendering process generates, based on the differential render tree and a render tree corresponding to a previous frame of interface, the render tree corresponding to the current frame of interface, and then determines the render tree corresponding to the current frame of interface. Then, the render thread or the unified rendering process determines the task load of the render tree corresponding to the current frame of interface.

S302: When the task load of the render tree is greater than a task load threshold, the application splits the render tree based on the task load, to obtain a plurality of render sub-trees.

If the task parameter of the render node is used to determine the task load of the render tree, as shown in Table 1, the UI thread or the render thread of the application or the unified rendering process determines whether the task load of the render tree is greater than a task load threshold 1. If the task load of the render tree is greater than the task load threshold 1, the UI thread or the render thread of the application or the unified rendering process splits the render tree to obtain the plurality of render sub-trees. A condition that the plurality of render sub-trees obtained through splitting need to meet is that a task load of any one of the plurality of render sub-trees obtained through splitting is less than the task load threshold 1.

Both the task load threshold and the task load threshold 1 may be referred to as a first threshold.

Alternatively, if the task parameter of the render node is used to determine the consumed time for converting the render tree into the GPU instruction, as shown in Table 2, the UI thread or the render thread of the application or the unified rendering process determines whether the task load of the render tree is greater than a time threshold 1. If the task load of the render tree is greater than the time threshold 1, the UI thread or the render thread of the application or the unified rendering process splits the render tree to obtain a plurality of render sub-trees. A condition that the plurality of render sub-trees obtained through splitting need to meet is that consumed time for converting any one of the plurality of render sub-trees obtained through splitting into a GPU instruction is less than the time threshold 1. The time threshold 1 may be related to a screen refresh rate. For example, a higher screen refresh rate indicates a smaller time threshold 1.

In the following, the task load of the render tree is used as an example for further description. The task load of the render tree and the consumed time for converting the render tree into the GPU instruction may have a same function, and therefore may be replaced with each other.

Optionally, in some implementations of this application, after the UI thread of the application splits the render tree to obtain the plurality of render sub-trees, data transferred or synchronized by the UI thread of the application to the render thread or the unified rendering process is the plurality of render sub-trees.

Optionally, in some implementations of this application, a thread concurrency cost and/or a dependency relationship between the render nodes may be considered during splitting of the render tree. The dependency relationship between the render nodes means that, due to a parent-child relationship between the render nodes, a drawing operation of a child node needs to be performed after a drawing operation of a parent node. The parent-child relationship between the render nodes may affect whether the interface can be correctly generated. This is because, when both the drawing operation of the parent node and the drawing operation of the child node are performed on a same pixel, the drawing operation of the parent node needs to be performed before the drawing operation of the child node. On the contrary, when not both the drawing operation of the parent node and the drawing operation of the child node are performed on a same pixel, the drawing operation of the parent render node and the drawing operation of the child node are independent of each other and have no dependency relationship.

Optionally, in some implementations of this application, when the thread concurrency cost is not considered, the render tree is split, so that a task load (or consumed time) of any render sub-tree is less than the task load threshold 1 (or the time threshold 1). The thread concurrency cost may alternatively be represented by the task load or the consumed time.

Optionally, in some implementations of this application, when the thread concurrency cost is considered, the render tree is split, so that a sum of a task load (or consumed time) of any render sub-tree and a task load (or consumed time) of thread concurrency is less than the task load threshold 1 (or the time threshold 1).

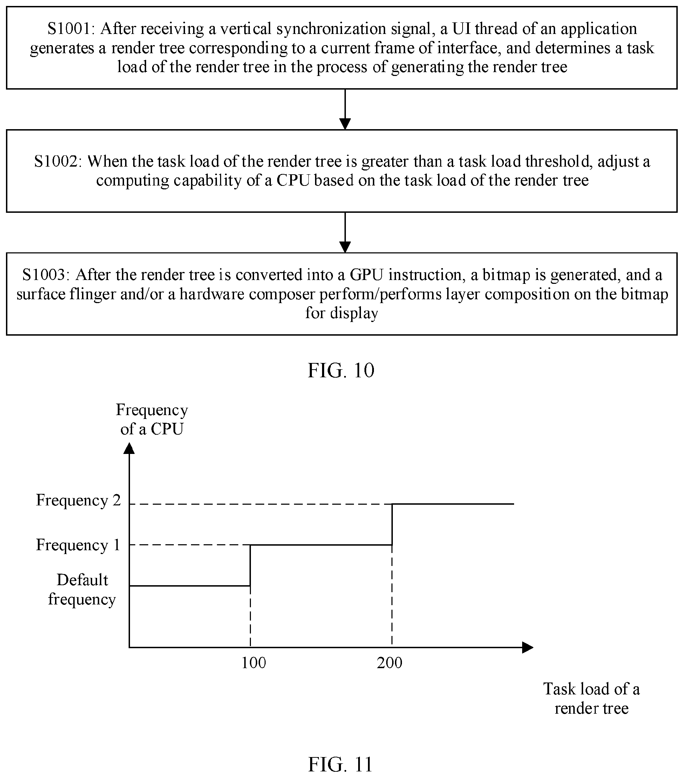

Optionally, in some implementations of this application, when it is determined that the task load of the render tree is greater than the task load threshold, the operating system may adjust a computing capability of the CPU, for example, adjust a working frequency of the CPU. Alternatively, when it is determined that the consumed time for converting the render tree into the GPU instruction exceeds the time threshold, the operating system may adjust a computing capability of the CPU, for example, adjust a working frequency of the CPU. For a manner of adjusting the frequency of the CPU based on the task load of the render tree, refer to the following text descriptions corresponding to FIG. 10 and FIG. 11. Details are not described herein.

The following uses examples to describe several manners of splitting the render tree.

(1) Splitting manner in which a task load of a render sub-tree is less than the task load threshold

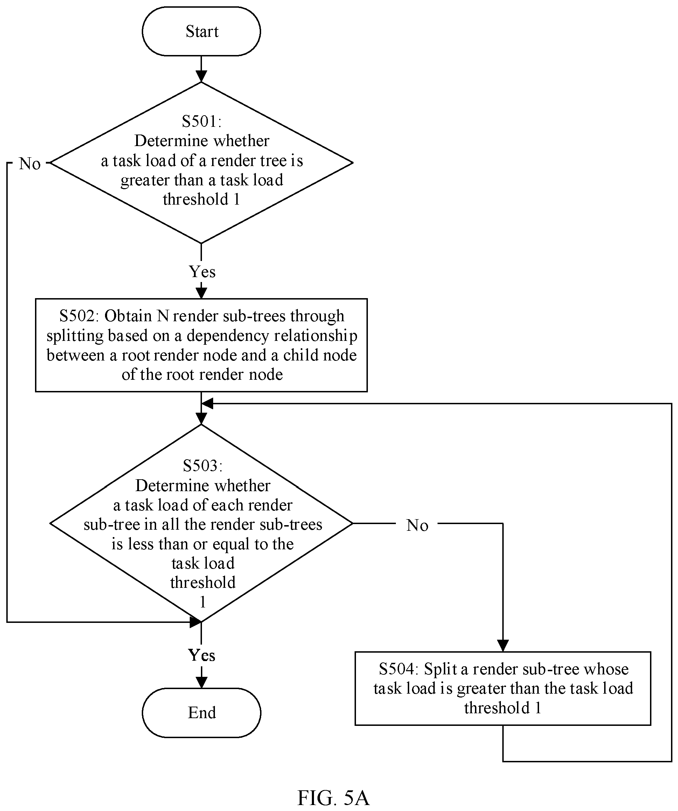

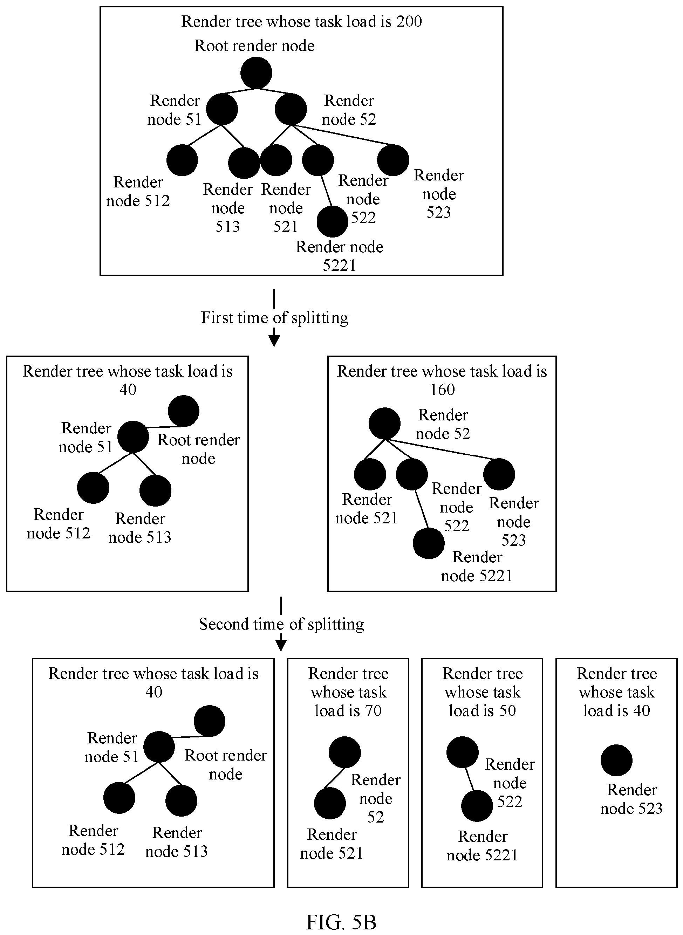

FIG. 5A and FIG. 5B each are an example diagram of splitting a render tree according to an embodiment of this application.

S501: Determine whether a task load of the render tree is greater than the task load threshold 1.

The UI thread or the render thread of the application or the unified rendering process determines whether the task load of the render tree is greater than the task load threshold 1. If the task load of the render tree is greater than the task load threshold 1, step S502 is performed. If the task load of the render tree is not greater than the task load threshold 1, the process ends.

S502: Obtain N render sub-trees through splitting based on a dependency relationship between a root render node and a child node of the root render node.

If the root render node of the render tree has N child nodes, the render tree is split into N render sub-trees. The child nodes of the root render node may be separately used as root nodes of the N render sub-trees. A render sub-tree in the N render sub-trees holds the root render node. In other words, the root render node is used as a root node of the render sub-tree. The child node is a node directly connected to the root node. In the render tree, the root node is the root render node.

S503: Determine whether a task load of each render sub-tree in all the render sub-trees is less than or equal to the task load threshold 1.

The UI thread or the render thread of the application or the unified rendering process determines whether the task load of the render sub-tree obtained through splitting is greater than the task load threshold 1. If the task load of the render sub-tree is greater than the task load threshold 1, step S502 is performed. If the task load of the render sub-tree is not greater than the task load threshold 1, the process ends.

Optionally, in some implementations of this application, when a thread concurrency cost is considered, the task load of each render sub-tree further needs to be added with one thread concurrency cost.

S504: Split a render sub-tree whose task load is greater than the task load threshold 1.

For a manner of splitting the render sub-tree, refer to the text descriptions in step S502 or FIG. 5B. Details are not described herein again.

If the task load threshold 1 is 100, as shown in FIG. 5B, child nodes of a root render node of a render tree whose task load is 200 are a render node 51 and a render node 52; child nodes of the render node 51 are a render node 512 and a render node 513; child nodes of the render node 52 are a render node 521, a render node 522, and a render node 523; and a child node of the render node 522 is a render node 5221.

After a first time of splitting, a render sub-tree whose task load is 40 and a render sub-tree whose task load is 160 are obtained. A root node of the render sub-tree whose task load is 40 is the root render node, a child node of the root render node is the render node 51, and the child nodes of the render node 51 are the render node 512 and the render node 513. A root node of the render tree whose task load is 160 is the render node 52, the child nodes of the render node 52 are the render node 521, the render node 522, and the render node 523, and the child node of the render node 522 is the render node 5221.

Because the task load of the render tree whose task load is 160 is greater than the task load threshold 1, splitting is performed for a second time.

After the second time of splitting, a render tree whose task load is 70, a render tree whose task load is 50, and a render tree whose task load is 40 are obtained. A root node of the render tree whose task load is 70 is the render node 52, and a child node of the render node 52 is the render node 512. A root node of the render tree whose task load is 50 is the render node 522, and the child node of the render node 522 is the render node 5221. A root node of the render tree whose task load is 40 is the render node 523.

After the second time of splitting, four render sub-trees are obtained, and task loads of the four render sub-trees are all less than the task load threshold 1. Further, in the four render sub-trees, dependency relationships between render nodes are all reserved. After the four render sub-trees are converted into GPU instructions, the GPU instructions corresponding to the four render sub-trees only need to be sequentially submitted to a command buffer (command buffer) in a command queue (Command Queue), to restore a complete GPU instruction. For specific content, refer to the following text descriptions of step S303. Details are not described herein.

That a dependency relationship between render nodes is reserved means that: Because no parent-child relationship is added between the render nodes, an internal sequence of GPU instructions corresponding to render sub-trees does not change. Further, after the GPU instructions are submitted to the command queue, a sequence of all the GPU instructions in the command queue does not change. It may be understood that, in the splitting manner in which the task load of the render sub-tree is less than the task load threshold, in a subsequent process of converting the render tree into a GPU instruction, working time of any thread does not exceed time corresponding to the task load threshold, to avoid cases such as frame loss or frame freezing on an interface.

(2) Load balancing splitting manner

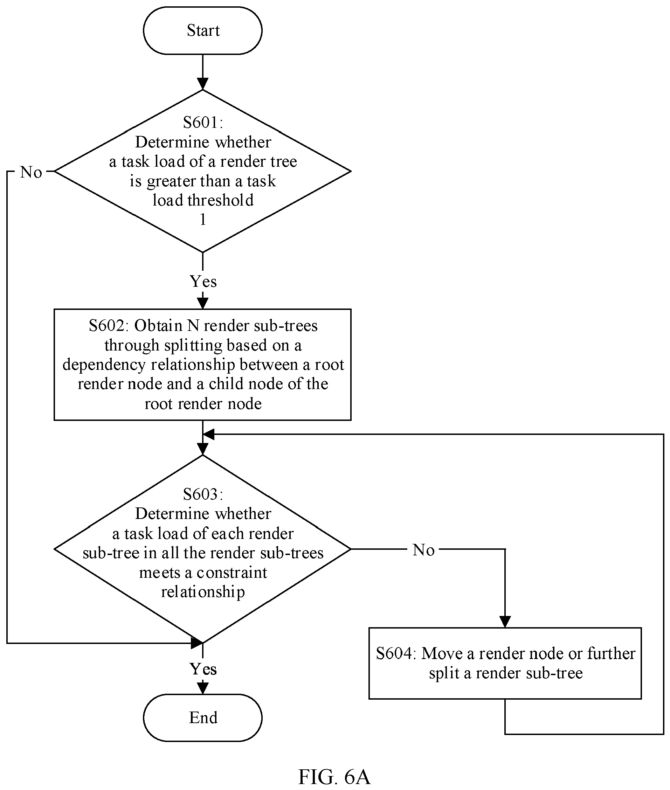

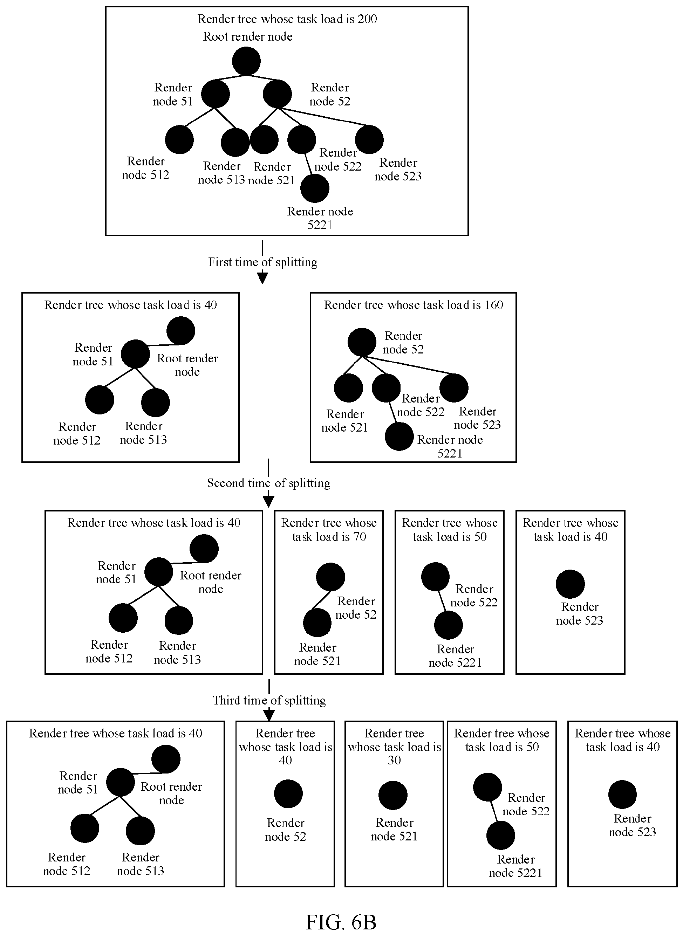

FIG. 6A and FIG. 6B each are an example diagram of splitting a render tree according to an embodiment of this application.

S601: Determine whether a task load of the render tree is greater than the task load threshold 1.

The UI thread or the render thread of the application or the unified rendering process determines whether the task load of the render tree is greater than the task load threshold 1. If the task load of the render tree is greater than the task load threshold 1, step S602 is performed. If the task load of the render tree is not greater than the task load threshold 1, the process ends.

S602: Obtain N render sub-trees through splitting based on a dependency relationship between a root render node and a child node of the root render node.

If the root render node has N child nodes, the render tree is split into N render trees. The child nodes of the root render node may be separately used as root nodes of the N render sub-trees. A render sub-tree in the N render sub-trees holds the root render node. In other words, the root render node is used as a root node of the render sub-tree. The child node is a render node directly connected to the root node.

S603: Determine whether a task load of each render sub-tree in all the render sub-trees meets a constraint relationship/

The UI thread or the render thread of the application or the unified rendering process determines whether a task load of the render sub-tree meets the constraint relationship. If the task load of the render sub-tree meets the constraint relationship, the process ends. If the task load of the render sub-tree does not meet the constraint relationship, step S604 is performed.

Optionally, in some implementations of this application, a minimum quantity of required render sub-trees may be first determined by using a task load of the render tree and the task load threshold 1. For example, if the task load of the render tree is 200, and the task load threshold 1 is 30, it is determined that the minimum quantity of required render sub-trees is 7. After seven render trees are obtained through splitting, it is determined whether each render sub-tree in the render sub-trees meets the constraint relationship shown below. If the constraint relationship is not met, the render sub-tree continues to be split. If the constraint relationship is met, the render sub-tree is no longer split.

For example, it is assumed that the task load of the render tree is $load_{total}$, the task load threshold 1 is $load_{threshold}$, a thread concurrency cost is $cost$, and a task load threshold of the render sub-tree is $load_{sub_i}$, where i is an $i^{th}$ render sub-tree, and N is a quantity of concurrent threads (a quantity of render sub-trees). In this case, a constraint relationship

$|load_{sub_i} + cost - \frac{load_{total}}{N}| < \varepsilon$ needs to be met, and $load_{sub_i} \leq loadt_{hreshold}$.

When the thread concurrency cost is not considered, the constraint relationship is $|load_{sub_i} - \frac{load_{total}}{N}| < \varepsilon$, and $load_{sub_i} \leq loadt_{hreshold}$.

If $loadt_{hreshold} = 80$, $load_{total} = 200$, $N = 5$, and $\varepsilon = 10$, $30 < load_{sub_i} < 50$. To be specific, the constraint relationship is met only when the task load of each render sub-tree is between 30 and 50.

If N=2, a value of N (the quantity of render trees) is first adjusted to cause $load_{sub_i} \leq load_{threshold}$, and then it is determined whether $|load_{sub_i} - \frac{load_{total}}{N}| < \varepsilon$ or $|load_{sub_i} + cost - \frac{load_{total}}{N}| < \varepsilon$ is met.

Optionally, in some implementations of this application, splitting and sorting of the render tree may be first determined according to $load_{sub_i} \leq load_{threshold}$. If $loadt_{hreshold} = 80$, and $load_{total} = 200$, N may be obtained through computing by using $\lfloor \frac{load_{total}}{load_{threshold}} \rfloor = N$, where $\lfloor \: \rfloor$ is a rounding-up function.

S604: Move a render node or further split a render sub-tree.

The UI thread or the render thread of the application or the unified rendering process may move, through render node moving, a render node in a render sub-tree whose task load is high to a render sub-tree whose task load is low. After the render node is moved, the dependency relationship between the render nodes may be damaged.

Alternatively, the UI thread or the render thread of the application or the unified rendering process splits a render sub-tree whose task load is high.

The render tree in the content shown in FIG. 6B is the same as that in FIG. 5B. However, according to the method shown in FIG. 6A, if $loadt_{hreshold} = 80$, $load_{total} = 200$, and $\varepsilon = 11$, when N=4, the constraint relationship is $39 < load_{sub_i} < 61$. Because the render sub-tree whose task load is 70 exists in the render tree after the second time of splitting, the constraint condition $39 < load_{sub_i} < 61$ is not met, and a render node needs to be moved or the render sub-tree needs to be further split. A task load of the render node 52 is 40, a task load of the render node 521 is 30, and the constraint condition $39 < load_{sub_i} < 61$ cannot be met through render node moving. Therefore, the render sub-tree whose task load is 70 is further split.

When N=5, $29 < load_{sub_i} < 51$. Task loads of render sub-trees obtained through splitting are respectively 40, 40, 30, 50, and 40, and the constraint condition is met.

It may be understood that, in the load balancing method for splitting the render tree, because task loads of different render sub-trees obtained through splitting are balanced, a short board effect may be avoided when the render tree is subsequently converted into a GPU instruction. In other words, duration of converting the render tree into the GPU instruction is prevented from being prolonged due to an excessively large task load of an individual render sub-tree.

Optionally, in some implementations of this application, in the process of splitting the render tree or splitting the render sub-tree, a render node having a sibling relationship may be preferentially split.

Optionally, in some implementations of this application, in the process of splitting the render tree or splitting the render sub-tree, if a rendering property of a render node is empty, a drawing operation of the render node may be split to different render sub-trees.

Optionally, in some implementations of this application, in the process of splitting the render tree or splitting the render sub-tree, if a render node does not depend on any render node, the render node may be randomly moved to different render sub-trees. For example, in FIG. 5B, if the root render node is a transparent render node, the render node 51 does not depend on any render node, and the render node 52 does not depend on any render node.

(3) Display area division-based splitting manner

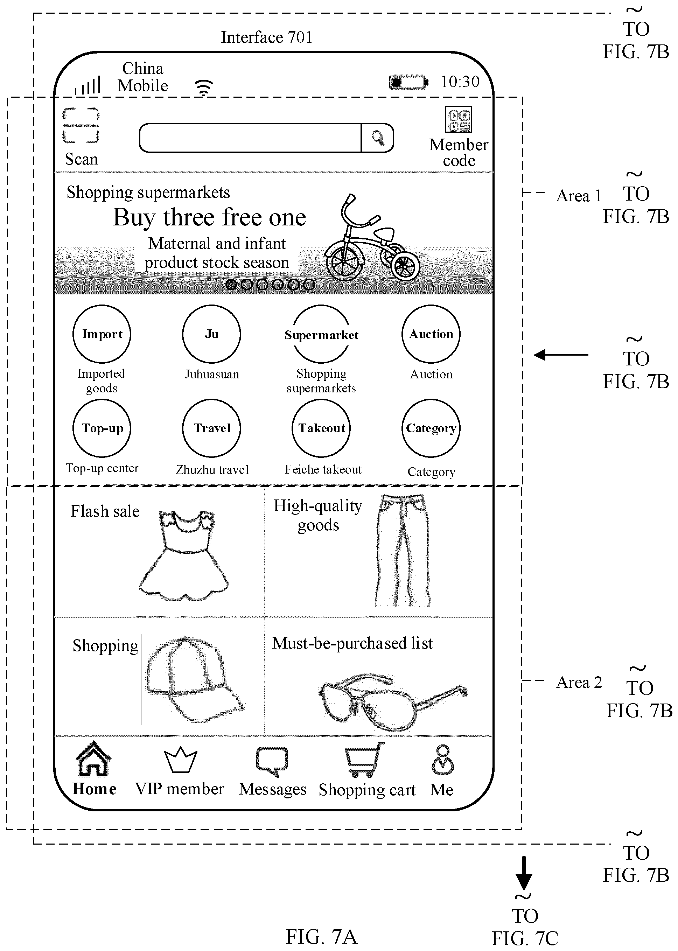

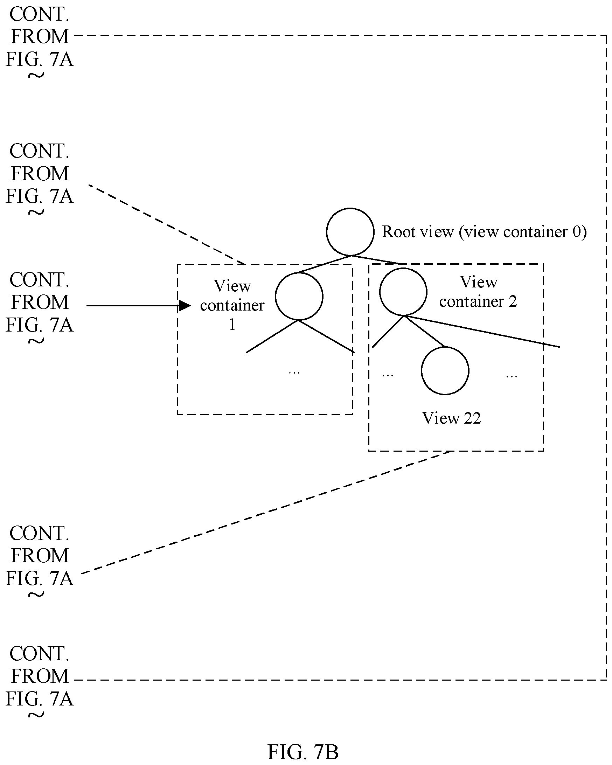

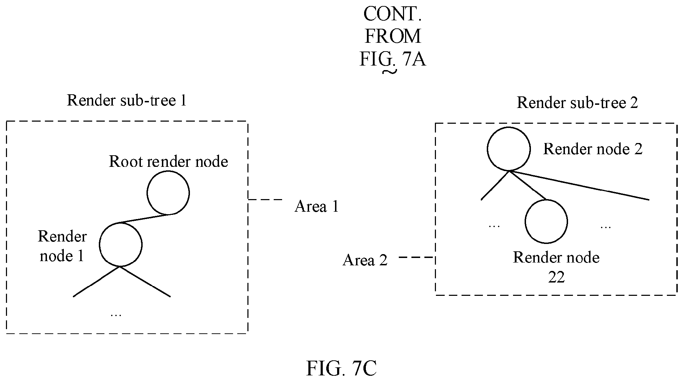

FIG. 7A to FIG. 7C are another example diagram of splitting a render tree according to an embodiment of this application.

An interface that is to be generated by the application and that is to be displayed in a next frame is an interface 701. Areas that are not shielded from each other may be divided on a window of the application in a plurality of manners. Content displayed in different areas is display content corresponding to different render sub-trees obtained through splitting.

For example, the interface 701 (excluding a status bar) is divided into an area 1 and an area 2. A view corresponding to the area 1 includes a view container 1 and a child node of the view container 1. A view corresponding to the area 2 includes a view container 2 and a child node of the view container 2, for example, a view 22. In this case, in a process of generating the render tree, the UI thread of the application may directly generate two render sub-trees, which are respectively a render sub-tree 1 corresponding to the area 1 and a render sub-tree 2 corresponding to the area 2.

Alternatively, after the UI thread of the application generates the render tree, the render tree is split into a render sub-tree 1 and a render sub-tree 2 according to area division.

(4) DrawOP splitting

Optionally, in some implementations of this application, after the render thread or a render sub-thread of the unified rendering process traverses the render tree to obtain DrawOP that is in a chain storage manner, DrawOP may be directly split.

S303: The application creates a plurality of render threads, and concurrently converts the plurality of render sub-trees into GPU instructions.

The application creates the plurality of render threads, or the unified rendering process creates a plurality of render sub-threads, to concurrently convert the plurality of render sub-trees into the GPU instructions.

A quantity of render threads is consistent with a quantity of render sub-trees obtained through splitting, or a quantity of render sub-threads is consistent with a quantity of render sub-trees obtained through splitting.

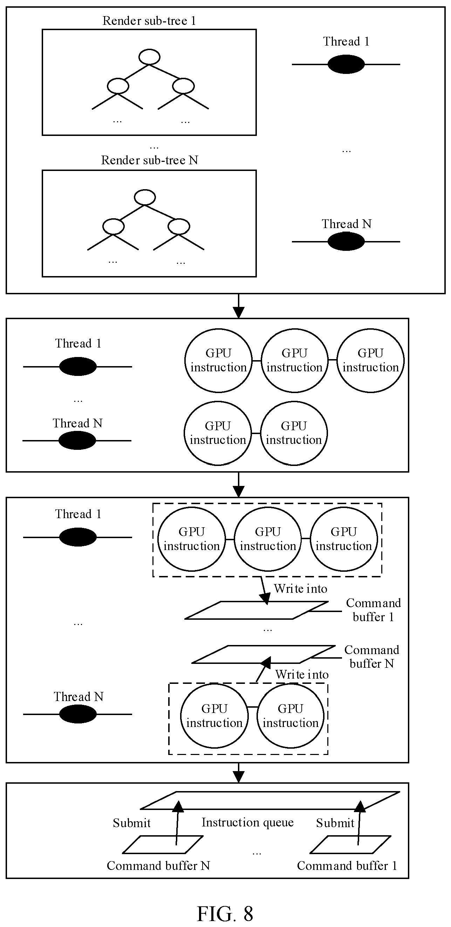

FIG. 8 is an example diagram of concurrently converting the render tree into a GPU instruction according to an embodiment of this application.

As shown in FIG. 8, after the render tree is split, a render sub-tree 1 to a render sub-tree N are obtained.

Different threads, such as render threads or render sub-threads, traverse different render sub-trees to obtain GPU instructions. The unified rendering process or the UI thread or the render thread of the application may further apply for N command buffers from a command buffer pool (commandBufferpool), for example, a command buffer 1 to a command buffer N in FIG. 8. The N command buffers are used to store GPU instructions corresponding to different render sub-trees.

Optionally, in some implementations of this application, in the process of traversing the render tree, the thread first encapsulates a drawing operation as a drawing operation structure (for example, DrawOP), and then converts the drawing operation structure into a GPU instruction, for example, an interface call in an OpenGL ES library, a Vulkan library, or a Metal library.

After obtaining the GPU instructions, different threads sequentially submit the GPU instruction in each command buffer to a buffer (for example, Primarily Buffer) in an instruction queue. A sequence is the same as a traversal sequence of the render nodes in the render tree. To be specific, if a traversal sequence of render nodes in the render sub-tree 1 is earlier than a traversal sequence of render nodes in the render sub-tree N, a GPU instruction in a command buffer 1 in Primarily Buffer is executed first, and a GPU instruction in a command buffer 2 in Primarily Buffer is executed later. Data in different command buffers may be submitted to the buffer in the instruction queue in the following plurality of manners. This is not limited herein.

Optionally, in some implementations of this application, when the electronic device converts the render tree into the GPU instruction by using the Vulkan library, for example, the GPU instruction in the command buffer 1 or the command buffer N may be submitted to Primarily Buffer in the instruction queue by using a vkQueueSubmit method. Because data synchronization between the plurality of command buffers and the buffer in the instruction queue is needed, the electronic device may complete synchronization by using a semaphore (Semaphore).

Optionally, in some implementations of this application, the electronic device may move the data in the plurality of command buffers to the buffer in the instruction queue in a pointer operation manner.

Optionally, in some implementations of this application, the electronic device may alternatively move the data in the plurality of command buffers to the buffer in the instruction queue in a copy manner.

Optionally, in some implementations of this application, the command buffer 1 may be the buffer in the instruction queue, for example, Primarily Buffer. In this case, a GPU instruction in another command buffer needs to be submitted to the command buffer 1.

Alternatively, optionally, in some implementations of this application, N command buffers may not be applied for from the command buffer pool, but N address ranges are divided in Primarily Buffer to respectively carry GPU instructions corresponding to different render sub-trees. For example, 0x000000 to 0x0000FF are an address range corresponding to a first command buffer, and 0x000100 to 0x0001FF are an address range corresponding to a second command buffer.

S304: After the GPU executes the GPU instructions to generate the bitmap, the surface flinger and/or the hardware composer perform/performs layer composition on the bitmap for display.

After the bitmap is generated, the bitmap is obtained by the surface flinger and/or the hardware composer, and then is used in layer composition. A composed bitmap is obtained by the display subsystem and sent for display.

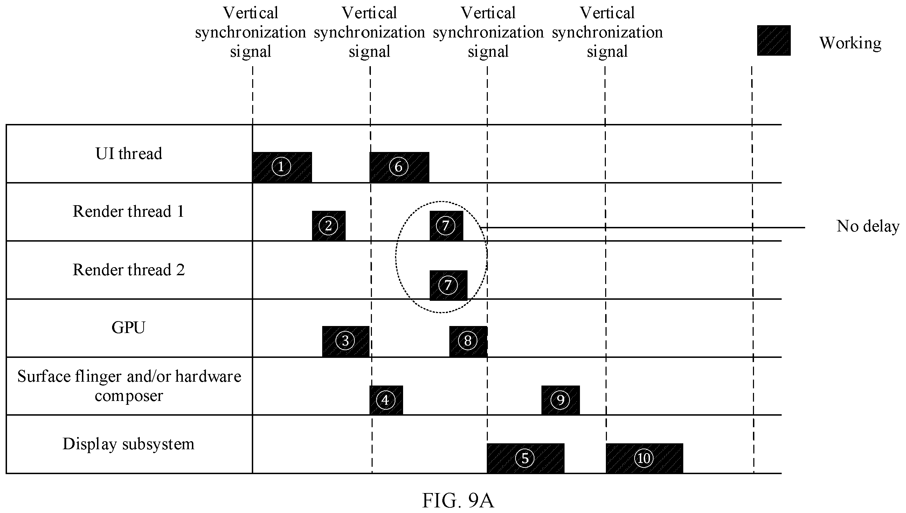

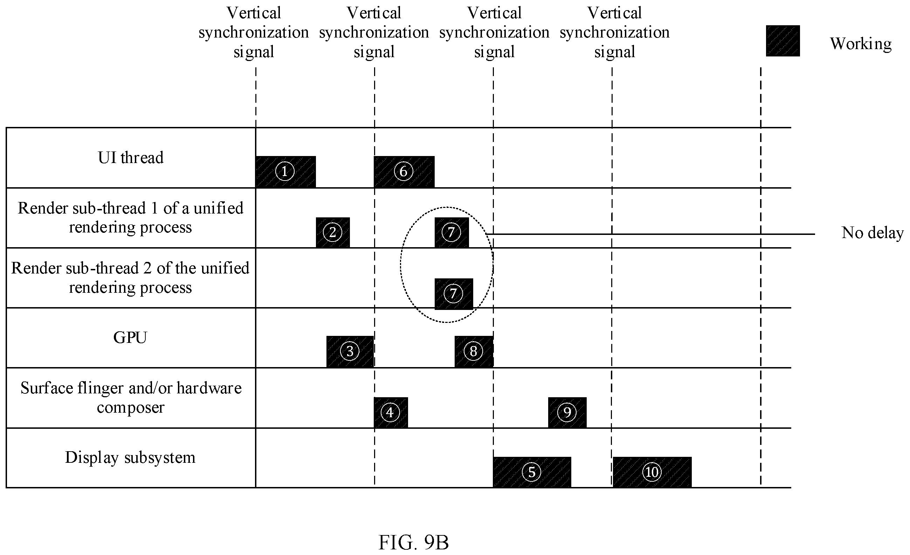

After the electronic device performs the interface generation method shown in FIG. 3, the process in which the electronic device generates an interface is shown in FIG. 9A and FIG. 9B.

FIG. 9A and FIG. 9B each are another example diagram of the process in which the electronic device generates an interface according to an embodiment of this application.

Content shown in FIG. 9A is compared with that in FIG. 2, and same content shown in FIG. 9A and FIG. 2 is not described again. In ⑦ in FIG. 9A, because the electronic device converts a render tree into a GPU instruction through two render threads (for example, a render thread 1 and a render thread 2 in FIG. 9A), a delay in converting the render tree into the GPU instruction is reduced. The GPU may receive the GPU instruction in time to generate a bitmap, as shown in ⑧ in FIG. 9A. Then, the GPU may transfer the generated bitmap to the surface flinger and/or the hardware composer, as shown in ⑨ in FIG. 9A. Finally, the display subsystem may send the bitmap that is used in layer composition for display, as shown in ⑩ in FIG. 9A, and no frame freezing occurs an interface.

A difference between FIG. 9A and FIG. 9B is that the process of converting the render tree into the GPU instruction may be executed by the render sub-thread of the unified rendering process, as shown in ⑦ in FIG. 9B. For example, the render sub-thread of the unified rendering process may be a render sub-thread 1 and a render sub-thread 2 in FIG. 9B. Same content in FIG. 9A and FIG. 9B is not described again.

With reference to the content shown in FIG. 3, the foregoing describes the procedure of the interface generation method in embodiments of this application. The following describes a procedure of another interface generation method that is different from the content shown in FIG. 3.

Optionally, in some implementations of this application, after the task load of the render tree is determined, the render tree may not be split, but the computing capability of the CPU is improved, to reduce the consumed time for converting the render tree into the GPU instruction.

FIG. 10 is another example diagram of the procedure of the interface generation method according to an embodiment of this application.

S1001: After receiving a vertical synchronization signal, a UI thread of an application generates a render tree corresponding to a current frame of interface, and determines a task load of the render tree in the process of generating the render tree.

For content of step S1001, refer to the foregoing descriptions in step S301. Details are not described herein again.

S1002: When the task load of the render tree is greater than a task load threshold, adjust a computing capability of a CPU based on the task load of the render tree.

When the task load of the render tree is greater than the task load threshold, the UI thread or a render thread of the application or a unified rendering process transfers the task load of the render tree to an operating system. The operating system adjusts the computing capability of the CPU based on the task load of the render tree, for example, adjusts a frequency of the CPU.

FIG. 11 is an example diagram of adjusting the computing capability of the CPU based on the task load of the render tree according to an embodiment of this application.

For example, as shown in FIG. 11, when the task load of the render tree is 0 to 100, the task load of the render tree may not be sent to the operating system, or the operating system does not adjust the frequency of the CPU after receiving the task load of the render tree. When the task load of the render tree is 101 to 200, the operating system adjusts the frequency of the CPU to a frequency 1 after receiving the task load of the render tree. When the task load of the render tree is 201 to 300, the operating system adjusts the frequency of the CPU to a frequency 2 after receiving the task load of the render tree. The frequency 2 is higher than the frequency 1.

After the render tree is converted into a GPU instruction, the operating system adjusts the computing capability of the CPU to a state before adjustment, for example, a default frequency in FIG. 11.

Optionally, in some implementations of this application, after the render tree is split and the render tree is traversed by using a plurality of threads, the frequency of the CPU can be reduced. For example, when the task load of the render tree is 101 to 200, after receiving the task load of the render tree, the operating system determines to concurrently process the render tree by using three threads, and adjusts the frequency of the CPU to a frequency 3. When the task load of the render tree is 201 to 300, after receiving the task load of the render tree, the operating system determines to concurrently process the render tree by using five threads, and adjusts the frequency of the CPU to a frequency 4. The frequency 3 is lower than the frequency 4.

It may be understood that, the computing capability of the CPU is adjusted, so that consumed time for converting the render tree into the GPU instruction can be reduced, to reduce a probability of frame freezing or frame loss on an interface.

S1003: After the render tree is converted into the GPU instruction, a bitmap is generated, and a surface flinger and/or a hardware composer perform/performs layer composition on the bitmap for display.

For content of step S1003, refer to the text descriptions in FIG. 1 and step 304. Details are not described herein again.

Optionally, in some implementations of this application, after the task load of the render tree is determined, the render tree may not be split, but the render tree is traversed by using a plurality of threads in different traversal sequences, to reduce the consumed time for converting the render tree into the GPU instruction.

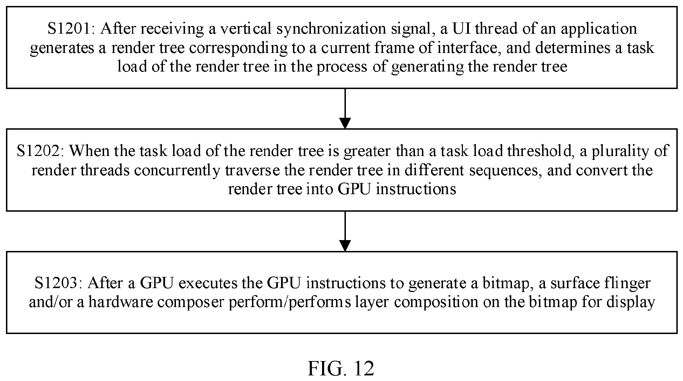

FIG. 12 is another example diagram of the interface generation method according to an embodiment of this application.

S1201: After receiving a vertical synchronization signal, a UI thread of an application generates a render tree corresponding to a current frame of interface, and determines a task load of the render tree in the process of generating the render tree.

For step S1201, refer to the text descriptions in step S301. Details are not described herein again.

S1202: When the task load of the render tree is greater than a task load threshold, a plurality of render threads concurrently traverse the render tree in different sequences, and convert the render tree into GPU instructions.

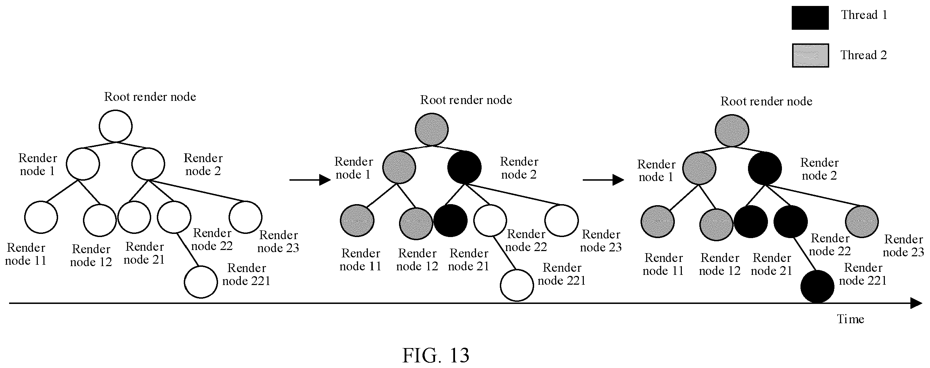

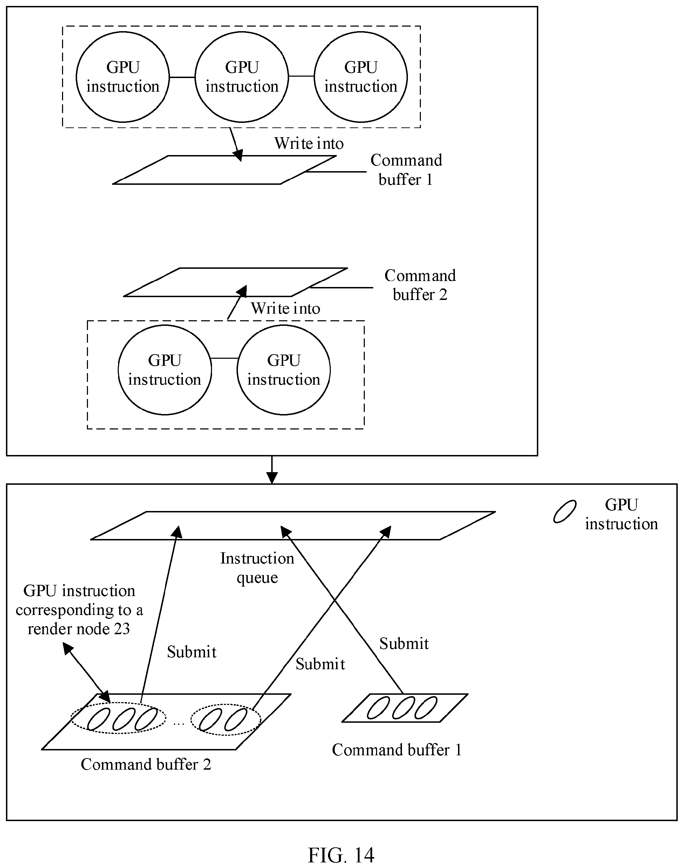

A quantity of render threads may be determined by using the task load of the render tree. For example, it is assumed that the task load of the render tree is $load_{total}$, the task load threshold is $load_{threshold}$, and the quantity of render threads is N. In this case, $N = \left\lfloor \frac{load_{total}}{load_{threshold}} \right\rfloor$, where $\lfloor \rfloor$ is a round-up function. Different render threads traverse the render tree in different sequences to generate GPU instructions, as shown in FIG. 13 and FIG. 14.

Optionally, in some implementations of this application, the quantity of render threads may alternatively be a preconfigured fixed value.

FIG. 13 is an example diagram in which render threads traverse the render tree in different sequences according to an embodiment of this application.

As shown in FIG. 13, a root node of the render tree is a root render node, child nodes of the root render node are a render node 1 and a render node 2, child nodes of the render node 1 are a render node 11 and a render node 12, child nodes of the render node 2 are a render node 21, a render node 22, and a render node 23, and a child node of the render node 22 is a render node 221.

First, a traversal sequence of a thread 1 is sequentially the root render node, the render node 1, the render node 11, and the render node 12. A traversal sequence of a thread 2 is sequentially the render node 2, the render node 21, the render node 22, the render node 23, and the render node 221.

Second, after the thread 1 traverses the root render node, the render node 1, the render node 11, and the render node 12, the thread 2 traverses to the render node 21.

Optionally, in some implementations of this application, after the thread 1 traverses the render node 1, the render node 11, and the render node 12, and the thread 2 traverses to the render node 21, the thread 2 continues to traverse the render node 22, the render node 23, and the render node 221. Then, according to content shown in FIG. 8, GPU instructions generated by different threads through render node transversal are located in different command buffers, and need to be sequentially submitted to a buffer in an instruction queue.

Optionally, in some implementations of this application, after the thread 1 traverses the render node 1, the render node 11, and the render node 12, and the thread 2 traverses to the render node 21, a traversal sequence of the thread 2 is sequentially the render node 22, the render node 23, and the render node 221, and a traversal sequence of the thread 1 is sequentially the render node 23, the render node 22, and the render node 221. In this traversal manner, the render node 23 is traversed by the thread 2, and the render node 22 and the render node 221 are traversed by the thread 1. Then, according to content shown in FIG. 14, GPU instructions in different command buffers are submitted to the buffer in the instruction queue.

FIG. 14 is an example diagram of submitting a GPU instruction to an instruction queue according to an embodiment of this application.

The render node 23 is traversed by the thread 2, and a GPU instruction corresponding to the render node 23 is stored in a command buffer 2. Therefore, to reconstruct a dependency relationship between the render nodes in the render tree, in a process of submitting GPU instructions in a command buffer 1 and the command buffer 2 to the command queue, a sequence of different GPU instructions needs to be adjusted.

For example, GPU instructions corresponding to the root render node, the render node 1, the render node 11, and the render node 12 are first submitted from the command buffer 2 to the buffer in the command queue. Then, all GPU instructions in the command buffer 1 are submitted to the buffer in the command queue. Finally, a remaining GPU instruction (namely, a GPU instruction corresponding to the render node 23) in the command buffer 2 is submitted to the buffer in the command queue.

Optionally, in some implementations of this application, all GPU instructions in the command buffer 2 and the command buffer 1 may be sequentially submitted to the buffers in the command queue. In this case, a dependency relationship between the render nodes of the render tree may not be reconstructed. If there is a dependency relationship between the render node 23 and the render node 2, the dependency relationship between the render nodes of the render tree is not reconstructed. If there is no dependency relationship between the render node 23 and the render node 2, the dependency relationship between the render nodes of the render tree is reconstructed.

S1203: After the GPU executes the GPU instructions to generate a bitmap, a surface flinger and/or a hardware composer perform/performs layer composition on the bitmap for display.

For content of step S1203, refer to the foregoing text descriptions in step S304. Details are not described herein again.

The following describes a hardware structure and a software architecture of an electronic device provided in embodiments of this application.

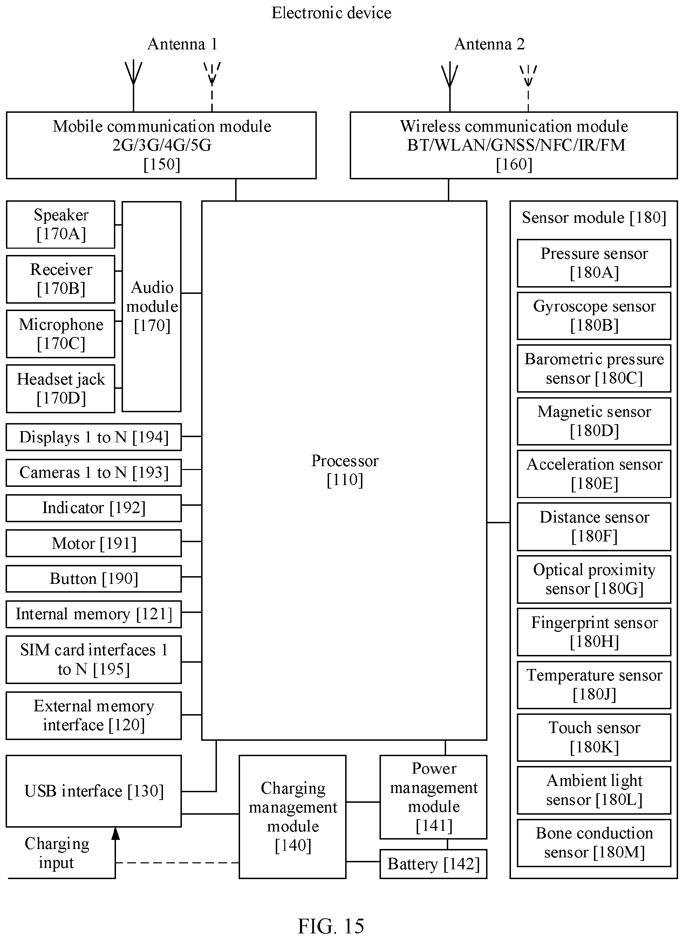

FIG. 15 is an example diagram of a hardware structure of an electronic device according to an embodiment of this application.

The electronic device may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart household device, and/or a smart city device. A specific type of the electronic device is not limited in embodiments of this application.

The electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device. In some other embodiments of this application, the electronic device may include more or fewer components than those shown in the figure, or some components may be combined, or some components may be split, or there may be a different component arrangement. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access and reduces waiting time of the processor 110. Therefore, system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/-transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used for audio communication, and sample, quantize, and code an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is used for asynchronous communication. The bus may be a two-way communication bus, and converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral device like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device. The processor 110 communicates with the display 194 through the DSI interface, to implement a display function of the electronic device.

The GPIO interface may be configured through software. The GPIO interface may be configured for control signals or data signals. In some embodiments, the GPIO interface may be configured to connect the processor 110 to the camera 193, the display 194, the wireless communication module 160, the audio module 170, the sensor module 180, and the like. The GPIO interface may alternatively be configured as an I2C interface, an I2S interface, a UART interface, a MIPI interface, or the like.

The USB interface 130 is an interface that conforms to a USB standard specification, and may be specifically a mini USB interface, a micro USB interface, a USB type-C interface, or the like. The USB interface 130 may be configured to connect to the charger to charge the electronic device, or may be used for data transmission between the electronic device and a peripheral device, or may be configured to connect to a headset for playing an audio through the headset. The interface may be further configured to connect to another electronic device, for example, anAR device.

It may be understood that an interface connection relationship between the modules illustrated in this embodiment of the present invention is merely an example for description, and does not constitute any limitation on a structure of the electronic device. In some other embodiments of this application, the electronic device may alternatively use an interface connection manner different from that in the foregoing embodiment, or use a combination of a plurality of interface connection manners.

The charging management module 140 is configured to receive a charging input from the charger. The charger may be a wireless charger or a wired charger. In some wired charging embodiments, the charging management module 140 may receive a charging input from a wired charger through the USB interface 130. In some wireless charging embodiments, the charging management module 140 may receive wireless charging input through a wireless charging coil of the electronic device. The charging management module 140 supplies power to the electronic device through the power management module 141 while charging the battery 142.

The power management module 141 is configured to connect the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a quantity of battery cycles, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device may be configured to cover one or more communication frequency bands. Different antennas may be further multiplexed to improve antenna utilization. For example, the antenna 1 may be multiplexed as a diversity antenna in a wireless local area network. In some other embodiments, an antenna may be used in combination with a tuning switch.

The mobile communication module 150 may provide a solution that is for wireless communication including 2G/3G/4G/5G and the like and that is used in the electronic device. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium or high-frequency signal. The demodulator is configured to demodulate a received electromagnetic wave signal into a low-frequency baseband signal. Then, the demodulator transfers the low-frequency baseband signal obtained through demodulation to the baseband processor for processing. The low-frequency baseband signal is processed by the baseband processor, and is then transferred to the application processor. The application processor outputs a sound signal through an audio device (which is not limited to the speaker 170A, the receiver 170B, or the like), or displays an image or a video through the display 194. In some embodiments, the modem processor may be an independent device. In some other embodiments, the modem processor may be independent of the processor 110, and is disposed in a same device as the mobile communication module 150 or another functional module.

The wireless communication module 160 may provide wireless communication solutions applied to the electronic device, including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the electronic device, the antenna 1 is coupled to the mobile communication module 150, and the antenna 2 is coupled to the wireless communication module 160, so that the electronic device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device implements a display function through the GPU, the display 194, the application processor, and the like. The GPU is a microprocessor for image processing, and connects the display 194 to the application processor. The GPU is configured to perform mathematical and geometric calculation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, quantum dot light-emitting diodes (quantum dot light-emitting diodes, QLED), or the like. In some embodiments, the electronic device may include one or N displays 194, where N is a positive integer greater than 1.

The electronic device may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise and brightness of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like an RGB format or a YUV format. In some embodiments, the electronic device may include one or N cameras 193, where N is a positive integer greater than 1.

The digital signal processor is configured to process a digital signal, and may process another digital signal in addition to the digital image signal. For example, when the electronic device selects a frequency, the digital signal processor is configured to perform Fourier transform and the like on frequency energy.

The video codec is configured to compress or decompress a digital video. The electronic device may support one or more types of video codecs. Therefore, the electronic device may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device, for example, image recognition, facial recognition, voice recognition, and text understanding, may be implemented through the NPU.

The internal memory 121 may include one or more random access memories (random access memories, RAMs) and one or more non-volatile memories (non-volatile memories, NVMs).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a 5th generation DDR SDRAM is usually referred to as a DDR5 SDRAM), and the like.

The non-volatile memory may include a magnetic disk storage device and a flash memory (flash memory).

The flash memory may be classified into an NOR flash, an NAND flash, a 3D NAND flash, and the like according to an operation principle; may be classified into a single-level cell (single-level cell, SLC), a multi-level cell (multi-level cell, MLC), a triple-level cell (triple-level cell, TLC), a quad-level cell (quad-level cell, QLC), and the like based on a quantity of electric potential levels of a cell; or may be classified into a universal flash storage (English: universal flash storage, UFS), an embedded multimedia card (embedded multimedia card, eMMC), and the like based on a storage specification.

The random access memory may be directly read and written by the processor 110, may be configured to store an executable program (for example, machine instructions) of an operating system or another running program, may be further configured to store data of a user and an application, and the like.

The non-volatile memory may also store an executable program, data of a user and an application, and the like, and may be loaded to the random access memory in advance for the processor 110 to directly perform reading and writing.

The external memory interface 120 may be configured to connect to an external non-volatile memory, to extend a storage capability of the electronic device. The external non-volatile memory communicates with the processor 110 through the external memory interface 120, to implement a data storage function. For example, files such as music and videos are stored in the external non-volatile memory.

The electronic device may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device may listen to music or answer a hands-free call through the speaker 170A.

The receiver 170B, also referred to as an "earpiece", is configured to convert an electrical audio signal into a sound signal. When a call is answered or voice information is received by using the electronic device, the receiver 170B may be put close to a human ear to receive a voice.

The microphone 170C, also referred to as a "mike" or a "mic", is configured to convert a sound signal into an electrical signal. When making a call or sending voice information, the user may make a sound near the microphone 170C through the mouth of the user, to input a sound signal to the microphone 170C. At least one microphone 170C may be disposed in the electronic device. In some other embodiments, two microphones 170C may be disposed in the electronic device, to collect a sound signal and further implement a noise reduction function. In some other embodiments, three, four, or more microphones 170C may alternatively be disposed in the electronic device, to collect a sound signal, implement noise reduction, identify a sound source, implement a directional recording function, and the like.

The headset jack 170D is configured to connect to a wired headset. The headset jack 170D may be the USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device determines a pressure strength based on a capacitance change. When a touch operation is performed on the display 194, the electronic device detects intensity of the touch operation through the pressure sensor 180A. The electronic device may calculate a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on a Messaging application icon, an instruction for viewing an SMS message is performed. When a touch operation whose touch operation intensity is greater than or equal to the first pressure threshold is performed on the Messaging application icon, an instruction for creating a new SMS message is performed.

The gyroscope sensor 180B may be configured to determine a motion gesture of the electronic device. In some embodiments, angular velocities of the electronic device around three axes (namely, axes x, y, and z) may be determined by using the gyroscope sensor 180B. The gyroscope sensor 180B may be configured to implement image stabilization during photographing. For example, when a shutter is pressed, the gyroscope sensor 180B detects a jitter angle of the electronic device, calculates, based on the angle, a distance for which a lens module needs to compensate, and enables the lens to offset jitter of the electronic device through reverse motion, to implement image stabilization. The gyroscope sensor 180B may also be used in a navigation scenario and a somatic game scenario.

The barometric pressure sensor 180C is configured to measure barometric pressure. In some embodiments, the electronic device calculates an altitude by using the barometric pressure measured by the barometric pressure sensor 180C, to assist in positioning and navigation.

The magnetic sensor 180D includes a Hall effect sensor. The electronic device may detect opening and closing of a flip cover by using the magnetic sensor 180D. In some embodiments, when the electronic device is a flip phone, the electronic device may detect opening and closing of a flip cover based on the magnetic sensor 180D. Further, a feature such as automatic unlocking upon opening of the flip cover is set based on a detected opening or closing state of the flip cover.

The acceleration sensor 180E may detect accelerations in various directions (usually on three axes) of the electronic device. When the electronic device is static, magnitude and a direction of gravity may be detected. The acceleration sensor may be further configured to identify a posture of the electronic device, and is used in an application such as switching between a landscape mode and a portrait mode or a pedometer.

The distance sensor 180F is configured to measure a distance. The electronic device may measure the distance through infrared or laser. In some embodiments, in a photographing scenario, the electronic device may measure the distance by using the distance sensor 180F, to implement quick focusing.

The optical proximity sensor 180G may include, for example, a light-emitting diode (LED) and an optical detector, for example, a photodiode. The light-emitting diode may be an infrared light-emitting diode. The electronic device emits infrared light by using the light-emitting diode. The electronic device detects infrared reflected light from a nearby object by using the photodiode. When sufficient reflected light is detected, it may be determined that there is an object near the electronic device. When detecting insufficient reflected light, the electronic device may determine that there is no object near the electronic device. The electronic device may detect, through the optical proximity sensor 180G, that the user holds the electronic device close to an ear for a call, to automatically turn off a screen for power saving. The optical proximity sensor 180G may also be used in a leather case mode or a pocket mode to automatically unlock or lock the screen.

The ambient light sensor 180L is configured to sense ambient light brightness. The electronic device may adaptively adjust brightness of the display 194 based on the sensed brightness of the ambient light. The ambient light sensor 180L may also be configured to automatically adjust a white balance during photographing. The ambient light sensor 180L may further cooperate with the optical proximity sensor 180G to detect whether the electronic device is in a pocket, so as to avoid an unintentional touch.

The fingerprint sensor 180H is configured to collect a fingerprint. The electronic device may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device executes a temperature processing policy based on the temperature detected by the temperature sensor 180J. For example, when the temperature reported by the temperature sensor 180J exceeds a threshold, the electronic device reduces performance of a processor near the temperature sensor 180J, to reduce power consumption and implement thermal protection. In some other embodiments, when the temperature is lower than another threshold, the electronic device heats the battery 142, to avoid an abnormal shutdown of the electronic device caused by a low temperature. In some other embodiments, when the temperature is lower than still another threshold, the electronic device boosts an output voltage of the battery 142, to avoid an abnormal shutdown caused by a low temperature.

The touch sensor 180K is also referred to as a "touch device". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided on the display 194. In some other embodiments, the touch sensor 180K may alternatively be disposed on a surface of the electronic device at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse, and receive a blood pressure beating signal. In some embodiments, the bone conduction sensor 180M may alternatively be disposed in the headset to form a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button or a touch button. The electronic device may receive a button input, and generate a button signal input related to a user setting and function control of the electronic device.

The motor 191 may generate a vibration prompt. The motor 191 may be used for an incoming call vibration prompt, or may be used for a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. The touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or pulled out of the SIM card interface 195, to implement contact with or separation from the electronic device. The electronic device may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or of different types. The SIM card interface 195 may also be compatible with different types of SIM cards. The SIM card interface 195 may also be compatible with an external storage card. The electronic device interacts with a network by using the SIM card, to implement functions such as calling and data communication. In some embodiments, the electronic device uses an eSIM, namely, an embedded SIM card. The eSIM card may be embedded in the electronic device, and cannot be separated from the electronic device.

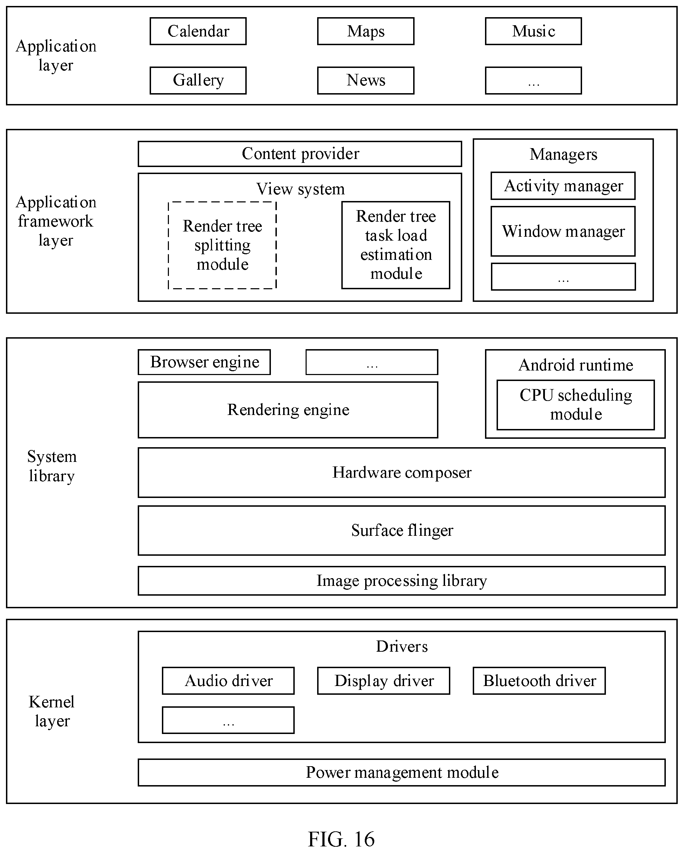

FIG. 16 is an example diagram of a software structure of an electronic device according to an embodiment of this application.

A software system of the electronic device may use a layered architecture, an event-driven architecture, a micro kernel architecture, a micro service architecture, or a cloud architecture. In embodiments of the present invention, an Android system with a layered architecture is used as an example to illustrate the software structure of the electronic device.

In the layered architecture, software is divided into several layers, and each layer has a clear role and task. The layers communicate with each other through a software interface. In some embodiments, the Android system is divided into four layers, namely, an application layer, an application framework layer, an Android runtime (Android runtime) and system library, and a kernel layer from top to bottom.

The application layer may include a series of application packages.

As shown in FIG. 16, the application packages may include applications such as Camera, Gallery, Calendar, Phone, Maps, Navigation, WLAN, Bluetooth, Music, Video, and Messaging.

The application framework layer provides an application programming interface (application programming interface, API) and a programming framework for an application at the application layer. The application framework layer includes some predefined functions.

As shown in FIG. 16, the application framework layer may include a window manager, a content provider, a view system, a phone manager, a resource manager, a notification manager, and the like.

The window manager is configured to manage a window program. The window manager may obtain a size of a display, determine whether there is a status bar, lock a screen, take a screenshot, and the like.

The content provider is configured to: store and obtain data, and enable the data to be accessed by an application. The data may include a video, an image, an audio, calls that are made and received, a browsing history and bookmarks, a phone book, and the like.

The view system includes visual controls such as a control for displaying a text and a control for displaying a picture. The view system may be configured to construct an application. A display interface may include one or more views. For example, a display interface including a notification icon of Messaging may include a text display view and a picture display view.

The phone manager is configured to provide a communication function of the electronic device, for example, management of a call status (including answering, declining, or the like).

The resource manager provides various resources such as a localized character string, an icon, an image, a layout file, and a video file for an application.

The notification manager enables an application to display notification information in the status bar, and may be configured to convey a notification message. The notification manager may automatically disappear after a short pause without requiring a user interaction. For example, the notification manager is configured to notify download completion, provide a message notification, and the like. The notification manager may alternatively be a notification that appears in a top status bar of the system in a form of a graph or a scroll bar text, for example, a notification of an application running on a background or a notification that appears on a screen in a form of a dialog window. For example, text information is displayed in the status bar, an announcement is given, the electronic device vibrates, or an indicator light blinks.

Optionally, in some implementations of this application, the view system includes a render tree task load estimation module. In a process of generating a render tree, after the render tree is generated, a task load of the render tree is determined.

Optionally, in some implementations of this application, the view system includes a render tree splitting module, and the render tree may be split in different manners. Different render trees are traversed by different threads to generate a GPU instruction.

Optionally, in some implementations of this application, a CPU scheduling module may adjust a computing capability of a CPU, for example, adjust a frequency of the CPU, based on the task load of the render tree.

The Android runtime includes a kernel library and a virtual machine. The Android runtime is responsible for scheduling and management of the Android system.

The kernel library includes two parts: a function that needs to be called by a Java language and a kernel library of Android.

The application layer and the application framework layer run in the virtual machine. The virtual machine executes Java files of the application layer and the application framework layer as binary files. The virtual machine is configured to perform functions such as object lifecycle management, stack management, thread management, security and exception management, and garbage collection.

The system library may include a plurality of functional modules, for example, a browser engine (webkit), a rendering engine, a surface flinger, a hardware composer, a media library (Media Library), an image processing library (for example, OpenGL ES), and a rendering engine (for example, a Skia library).

The media library supports playback and recording in a plurality of commonly used audio and video formats, static image files, and the like. The media library may support a plurality of audio and video coding formats, for example, MPEG-4, H.264, MP3, AAC, AMR, JPG, and PNG.

The image processing library is configured to implement three-dimensional graphics drawing, image rendering, and the like.

The rendering engine is a drawing engine for 2D drawing.

The kernel layer is a layer between hardware and software. The kernel layer includes a display driver, a camera driver, an audio driver, and a sensor driver.

Optionally, in some implementations of this application, a display subsystem includes the display driver.

According to the context, the term "when" used in the foregoing embodiments may be interpreted as a meaning of "if", "after", "in response to determining", or "in response to detecting". Similarly, according to the context, the phrase "when it is determined that..." or "if (a stated condition or event) is detected" may be interpreted as a meaning of "if it is determined that...", "in response to determining...", "when (a stated condition or event) is detected", or "in response to detecting (a stated condition or event)".

All or some of the foregoing embodiments may be implemented through software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, like a server or a data center that integrates one or more usable media. The usable medium may be a magnetic medium (for example, a floppy disk, a hard disk, or a magnetic tape), an optical medium (for example, a DVD), a semiconductor medium (for example, a solid-state drive), or the like.

A person of ordinary skill in the art may understand that all or some of the processes of the methods in embodiments may be implemented by a computer program instructing related hardware. The program may be stored in a computer-readable storage medium. When the program runs, the processes of the methods in embodiments are performed. The storage medium includes any medium that can store program code, such as a ROM, a random access memory RAM, a magnetic disk, or an optical disc.

**Claims**

1. An interface generation method, applied to an electronic device on which a first application runs, wherein the method comprises:

   generating, by the electronic device, a first render tree, wherein the first render tree comprises a drawing operation used to generate a frame of interface of the first application;
   splitting, by the electronic device, the first render tree to obtain N render sub-trees, wherein N is greater than 1;
   concurrently converting, by the electronic device, the N render sub-trees into a first rendering instruction, wherein a rendering instruction is an instruction in a rendering engine, an image processing library, or a GPU driver; and
   generating, by the electronic device, the frame of interface of the first application based on the first rendering instruction.

2. The method according to claim 1, wherein the splitting, by the electronic device, the first render tree to obtain N render sub-trees specifically comprises:

   determining, by the electronic device, a first task load, wherein the first task load is a task load of the first render tree, and the first task load indicates consumed time or a computing amount for converting the first render tree into the first rendering instruction; and

in response to determining, by the electronic device, that the first task load is greater than a first threshold, splitting, by the electronic device, the first render tree to obtain the N render sub-trees.

3. The method according to claim 2, wherein after the determining, by the electronic device, a first task load, the method further comprises:

    determining, by the electronic device, M based on the first task load and the first threshold, wherein M is less than or equal to N, and M is an integer greater than or equal to a ratio of the first task load to the first threshold; and determining, by the electronic device, that an integer greater than or equal to M is N.

4. The method according to claim 2, wherein the determining, by the electronic device, a first task load specifically comprises:
    determining, by the electronic device, a task load of the drawing operation on the first render tree, to determine the first task load.

5. The method according to any one of claims 1 to 4, wherein the N render sub-trees comprise a second render tree and a third render tree, a difference between a second task load and a third task load is less than a difference threshold, the second task load is a task load of the second render tree, the second task load is used to measure consumed time or a computing amount for converting the second render tree into a rendering instruction, the third task load is a task load of the third render tree, and the third task load is used to measure consumed time or a computing amount for converting the third render tree into a rendering instruction.

6. The method according to claim 1 or 2, wherein the splitting, by the electronic device, the first render tree to obtain N render sub-trees specifically comprises:

    determining, by the electronic device, that a root render node of the first render tree has N child nodes, wherein the child nodes are render nodes directly connected to the root render node; and
    splitting, by the electronic device, the first render tree into the N render sub-trees.

7. The method according to claim 1 or 2, wherein the splitting, by the electronic device, the first render tree to obtain N render sub-trees specifically comprises:

    dividing, by the electronic device, the interface of the first application into N areas; and
    splitting, by the electronic device, the first render tree based on the N areas, to obtain the N render sub-trees, wherein the N render sub-trees are in one-to-one correspondence with the N areas.

8. The method according to claim 1, wherein the splitting, by the electronic device, the first render tree to obtain N render sub-trees specifically comprises:

    determining, by the electronic device, a first task load, wherein the first task load is a task load of the first render tree, the first task load is used to measure consumed time or a computing amount for converting the first render tree into the rendering instruction, and the first task load is greater than a first threshold;
    determining, by the electronic device, that a root render node of the first render tree has K child nodes, wherein K is less than N;
    splitting, by the electronic device, the first render tree into K render sub-trees; and
    after the electronic device determines that a task load of a fourth render tree is greater than the first threshold, splitting, by the electronic device, the fourth render tree to obtain N-K+1 render sub-trees, wherein the K render sub-trees comprise the fourth render tree, and a task load of each of the N render sub-trees is less than the first threshold.

9. The method according to any one of claims 1 to 7, wherein the concurrently converting, by the electronic device, the N render sub-trees into a first rendering instruction specifically comprises:

    respectively filling, by the electronic device into N buffers through N threads, instructions converted from the N render sub-trees; and
    submitting, by the electronic device, the instructions in the N buffers to a first buffer, wherein the instructions in the first buffer are the first rendering instruction.

10. An interface generation method, applied to an electronic device, wherein a first process runs on the electronic device, and the method comprises:

generating, by the electronic device, a first render tree through the first process, wherein the first render tree comprises a drawing operation used to generate a frame of interface of the first process;

splitting, by the electronic device, the first render tree into a second render tree and a third render tree, wherein the second render tree comprises a part of the drawing operation on the first render tree, the third render tree comprises a part of the drawing operation on the first render tree, and the second render tree is different from the third render tree;

converting, by the electronic device, the second render tree into a first rendering instruction through a first thread, wherein the first rendering instruction is stored in a first buffer, and a rendering instruction is an instruction in a rendering engine, an image processing library, or a GPU driver;

converting, by the electronic device, the third render tree into a second rendering instruction through a second thread, wherein the second instruction is stored in a second buffer; and

generating, by the electronic device, the frame of interface of the first process based on the first rendering instruction and the second rendering instruction.

11. The method according to claim 10, wherein the method further comprises:
determining, by the electronic device, a first task load, wherein the first task load is a task load of the first render tree, the first task load is used to measure consumed time or a computing amount for converting the first render tree into a rendering instruction, and the first task load is greater than a first threshold.

12. The method according to claim 10 or 11, wherein the generating, by the electronic device, the frame of interface of the first process based on the first instruction and the second instruction specifically comprises:

submitting, by the electronic device, the instruction in the first buffer and the rendering instruction in the second buffer to a third buffer, wherein the first rendering instruction is located in the first buffer held by the first thread, and the second rendering instruction is located in the second buffer held by the second thread; and

generating, by the electronic device, the frame of interface of the first process based on the third buffer.

13. The method according to claim 12, wherein the third buffer is the second buffer, or the third buffer is the first buffer.

14. An interface generation method, applied to an electronic device, wherein a first application runs on the electronic device, and the method comprises:

generating, by the electronic device, a first render tree, wherein the first render tree comprises a drawing operation used to generate a frame of interface of the first application;

determining, by the electronic device, a first task load, wherein the first task load is a task load of the first render tree, the first task load is used to measure consumed time or a computing amount for converting the first render tree into a rendering instruction, the first task load is greater than a first threshold, and a rendering instruction is an instruction in a rendering engine, an image processing library, or a GPU driver;

if the first task load is greater than the first threshold, changing, by the electronic device, a configured working frequency of a CPU from a first frequency to a second frequency, wherein the second frequency is higher than the first frequency;

generating, by the electronic device, the frame of interface of the first application based on the first render tree; and

in the process in which the electronic device generates the frame of interface of the first application, working, by the electronic device, at the second frequency.

15. The method according to claim 14, wherein the generating, by the electronic device, the frame of interface of the first application based on the first render tree specifically comprises:

splitting, by the electronic device, the first render tree to obtain N render sub-trees, wherein N is an integer greater than 1;

concurrently converting, by the electronic device, the N render sub-trees into a first rendering instruction; and

generating, by the electronic device, the frame of interface of the first application based on the first rendering instruction.

16. An interface generation method, applied to an electronic device, wherein a first application runs on the electronic device, and the method comprises:

generating, by the electronic device, a first render tree, wherein the first render tree comprises a drawing operation used to generate a frame of interface of the first application;

traversing, by the electronic device, different parts of the first render tree through a plurality of different threads, to generate a first rendering instruction, wherein a rendering instruction is an instruction in a rendering engine, an image processing library, or a GPU driver; and

generating, by the electronic device, the frame of interface of the first application based on the first rendering instruction.

17. The method according to claim 16, wherein before the traversing, by the electronic device, the first render tree in different sequences through a plurality of different threads, to generate a first instruction, the method further comprises:

determining, by the electronic device, a first task load, wherein the first task load is a task load of the first render tree, and the first task load is used to measure consumed time or a computing amount for converting the first render tree into the first rendering instruction; and

determining, by the electronic device, that the first task load is greater than a first threshold.

18. The method according to claim 16 or 17, wherein the traversing, by the electronic device, the first render tree in different sequences through a plurality of different threads, to generate a first instruction specifically comprises:

traversing, by the electronic device, a first part of the first render tree through a first thread, and storing a generated second rendering instruction in a first buffer;

traversing, by the electronic device, a second part of the first render tree through a second thread, and storing a generated third rendering instruction in a second buffer; and

submitting, by the electronic device, the rendering instruction in the first buffer and the rendering instruction in the second buffer to a third buffer to obtain the first rendering instruction.

19. The method according to claim 18, wherein the submitting, by the electronic device, the rendering instruction in the first buffer and the rendering instruction in the second buffer to a third buffer to obtain the first rendering instruction specifically comprises:

the rendering instruction in the first buffer comprises the second rendering instruction and the third rendering instruction, and the instruction in the second buffer comprises a fourth rendering instruction; and

an arrangement sequence of the instructions in the third buffer is sequentially the second rendering instruction, the fourth rendering instruction, and the third rendering instruction.

20. An electronic device, wherein the electronic device comprises one or more processors and a memory; and the memory is coupled to the one or more processors, the memory is configured to store computer program code, the computer program code comprises computer instructions, and the one or more processors invoke the computer instructions, to enable the electronic device to perform the method according to any one of claims 1 to 19.

21. A chip system, wherein the chip system is used in an electronic device, the chip system comprises one or more processors, and the processor is configured to invoke computer instructions, to enable the electronic device to perform the method according to any one of claims 1 to 19.

22. A computer-readable storage medium, comprising instructions, wherein when the instructions are run on an electronic device, the electronic device is enabled to perform the method according to any one of claims 1 to 19.

23. A computer program product comprising instructions, wherein when the computer program product runs on an electronic device, the electronic device is enabled to perform the method according to any one of claims 1 to 19.

| Application | | Surface flinger |
|---|---|---|
| Main thread | Render thread | |

S101: The main thread traverses views of the application, and stores a drawing operation of each view to a newly generated render tree

S102: The main thread synchronizes the render tree to the render thread, where the render tree is located in a stack of the application

S103: The render thread executes a drawing instruction in the render tree to generate a bitmap

S104: The render thread sends a surface carrying the bitmap to the surface flinger

FIG. 1

FIG. 2

S301: After receiving a vertical synchronization signal, a UI thread of an application generates a render tree corresponding to a current frame of interface, and determines a task load of the render tree in the process of generating the render tree

S302: When the task load of the render tree is greater than a task load threshold, the application splits the render tree based on the task load, to obtain a plurality of render sub-trees

S303: The application creates a plurality of render threads, and concurrently converts the plurality of render sub-trees into GPU instructions

S304: After a GPU executes the GPU instructions to generate a bitmap, a surface flinger and/or a hardware composer perform/performs layer composition on the bitmap for display

FIG. 3

Sequence of traversing views by a UI thread

Render tree in a generation process

Root render node

**Task parameter**

Rendering property

Drawing instruction list

Render node 1

**Task parameter**

Rendering property

Drawing instruction list

...

Correspond

View structure of a frame of interface

Decorview

Root view (view container 0)

View container 2

View 22

View container 1

...

...

...

TO
FIG. 4B

FIG. 4A

View structure of the frame of interface

Decorview

Root view (view container 0)

View container 1

View container 2

View 22

CONT. FROM FIG. 4A

Correspond

TO FIG. 4C

FIG. 4B

EP 4 571 502 A1

Render tree

**Task parameter**

| Rendering property | Drawing instruction list |

Root render node

Render node 1

**Task parameter**

| Rendering property | Drawing instruction list |

Render node 2

**Task parameter**

| Rendering property | Drawing instruction list |

...

...

...

**Task parameter**

| Rendering property | Drawing instruction list |

Render node 22

CONT.
FROM
FIG. 4B
~

FIG. 4C

Start

S501:
Determine whether
a task load of a render tree is
greater than a task load
threshold 1

No

Yes

S502: Obtain N render sub-trees through splitting based on a dependency relationship between a root render node and a child node of the root render node

S503:
Determine whether
a task load of each render
sub-tree in all the render sub-trees
is less than or equal to the
task load
threshold
1

No

Yes

End

S504: Split a render sub-tree whose task load is greater than the task load threshold 1

FIG. 5A

Render tree whose task load is 200

Root render node

Render node 51

Render node 52

Render node 512

Render node 513

Render node 521

Render node 522

Render node 523

Render node 5221

First time of splitting

Render tree whose task load is 40

Render node 51

Root render node

Render node 512

Render node 513

Render tree whose task load is 160

Render node 52

Render node 521

Render node 522

Render node 523

Render node 5221

Second time of splitting

Render tree whose task load is 40

Render node 51

Root render node

Render node 512

Render node 513

Render tree whose task load is 70

Render node 52

Render node 521

Render tree whose task load is 50

Render node 522

Render node 5221

Render tree whose task load is 40

Render node 523

FIG. 5B

Start

S601:
Determine whether
a task load of a render tree
is greater than a task
load threshold
1

No

Yes

S602: Obtain N render sub-trees
through splitting based on a
dependency relationship between a root
render node and a child node of the
root render node

S603:
Determine whether
a task load of each render
sub-tree in all the render sub-trees
meets a constraint
relationship

No

Yes

S604: Move a render node or further
split a render sub-tree

End

FIG. 6A

Render tree whose task load is 200

Root render node

Render node 51

Render node 52

Render node 512

Render node 513

Render node 521

Render node 522

Render node 523

Render node 5221

First time of splitting

Render tree whose task load is 40

Render node 51

Root render node

Render node 512

Render node 513

Render tree whose task load is 160

Render node 52

Render node 521

Render node 522

Render node 523

Render node 5221

Second time of splitting

Render tree whose task load is 40

Render node 51

Root render node

Render node 512

Render node 513

Render tree whose task load is 70

Render node 52

Render node 521

Render tree whose task load is 50

Render node 522

Render node 5221

Render tree whose task load is 40

Render node 523

Third time of splitting

Render tree whose task load is 40

Render node 51

Root render node

Render node 512

Render node 513

Render tree whose task load is 40

Render node 52

Render tree whose task load is 30

Render node 521

Render tree whose task load is 50

Render node 522

Render node 5221

Render tree whose task load is 40

Render node 523

FIG. 6B

Interface 701

~
TO
FIG. 7B

China
Mobile 10:30

Scan

Member
code

Shopping supermarkets

# Buy three free one

Maternal and infant
product stock season

● ○ ○ ○ ○ ○

~
TO Area 1
FIG. 7B

**Import**

Imported
goods

**Ju**

Juhuasuan

**Supermarket**

Shopping
supermarkets

**Auction**

Auction

~
TO
FIG. 7B

**Top-up**

Top-up center

**Travel**

Zhuzhu travel

**Takeout**

Feiche takeout

**Category**

Category

Flash sale

High-quality
goods

Shopping

Must-be-purchased list

~
TO Area 2
FIG. 7B

**Home**    VIP member    Messages    Shopping cart    Me

~
TO
FIG. 7B

FIG. 7A

~
TO
FIG. 7C

CONT.
FROM
FIG. 7A
~

CONT.
FROM
FIG. 7A
~

CONT.
FROM
FIG. 7A
~

Root view (view container 0)

View
container
1

View
container 2

...

...

...

View 22

CONT.
FROM
FIG. 7A
~

CONT.
FROM
FIG. 7A
~

FIG. 7B

CONT.
FROM
FIG. 7A

Render sub-tree 1

Root render node

Render
node 1

...

Area 1

Render sub-tree 2

Render node 2

...    ...

Render node
22

Area 2

FIG. 7C

FIG. 8

|  | Vertical synchronization signal | Vertical synchronization signal | Vertical synchronization signal | Vertical synchronization signal | ▨ Working |
|---|---|---|---|---|---|
| UI thread | ① | ⑥ | | | |
| Render thread 1 | ② | | ⑦ | | No delay |
| Render thread 2 | | | ⑦ | | |
| GPU | ③ | ⑧ | | | |
| Surface flinger and/or hardware composer | | ④ | ⑨ | | |
| Display subsystem | | | ⑤ | ⑩ | |

FIG. 9A

FIG. 9B

EP 4 571 502 A1

S1001: After receiving a vertical synchronization signal, a UI thread of an application generates a render tree corresponding to a current frame of interface, and determines a task load of the render tree in the process of generating the render tree

S1002: When the task load of the render tree is greater than a task load threshold, adjust a computing capability of a CPU based on the task load of the render tree

S1003: After the render tree is converted into a GPU instruction, a bitmap is generated, and a surface flinger and/or a hardware composer perform/performs layer composition on the bitmap for display

FIG. 10

Frequency
of a CPU

Frequency 2

Frequency 1

Default
frequency

100        200

Task load of a
render tree

FIG. 11

S1201: After receiving a vertical synchronization signal, a UI thread of an application generates a render tree corresponding to a current frame of interface, and determines a task load of the render tree in the process of generating the render tree

S1202: When the task load of the render tree is greater than a task load threshold, a plurality of render threads concurrently traverse the render tree in different sequences, and convert the render tree into GPU instructions

S1203: After a GPU executes the GPU instructions to generate a bitmap, a surface flinger and/or a hardware composer perform/performs layer composition on the bitmap for display

FIG. 12

FIG. 13

FIG. 14

Electronic device

Antenna 1

Antenna 2

| Mobile communication module 2G/3G/4G/5G [150] | Wireless communication module BT/WLAN/GNSS/NFC/IR/FM [160] |

Speaker [170A]

Receiver [170B]

Audio module [170]

Microphone [170C]

Headset jack [170D]

Displays 1 to N [194]

Cameras 1 to N [193]

Indicator [192]

Motor [191]

Button [190]

Internal memory [121]

SIM card interfaces 1 to N [195]

External memory interface [120]

USB interface [130]

Charging input

Charging management module [140]

Power management module [141]

Battery [142]

Processor [110]

Sensor module [180]

Pressure sensor [180A]

Gyroscope sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

FIG. 15

| Application layer | Calendar | Maps | Music |
|---|---|---|---|
| | Gallery | News | ... |

| Application framework layer | Content provider | | Managers |
|---|---|---|---|
| | View system | | Activity manager |
| | Render tree splitting module | Render tree task load estimation module | Window manager |
| | | | ... |

| System library | Browser engine | ... | Android runtime |
|---|---|---|---|
| | Rendering engine | | CPU scheduling module |
| | Hardware composer | | |
| | Surface flinger | | |
| | Image processing library | | |

| Kernel layer | Drivers | | |
|---|---|---|---|
| | Audio driver | Display driver | Bluetooth driver |
| | ... | | |
| | Power management module | | |

FIG. 16

## INTERNATIONAL SEARCH REPORT

| International application No. |
| --- |
| **PCT/CN2023/124034** |

### A. CLASSIFICATION OF SUBJECT MATTER

G06F 9/451(2018.01)i

According to International Patent Classification (IPC) or to both national classification and IPC

### B. FIELDS SEARCHED

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 并行, 界面, 渲染, 拆分, 分割, 子渲染, 耗时, 计算量, 时长, 频率, 增加, 提升, parallel, interface, rendering, time, frequency, increase

### C. DOCUMENTS CONSIDERED TO BE RELEVANT

| Category* | Citation of document, with indication, where appropriate, of the relevant passages | Relevant to claim No. |
| --- | --- | --- |
| X | CN 110764849 A (UC MOBILE LIMITED) 07 February 2020 (2020-02-07) description, paragraphs 0046-0064 and 0079-0088 | 1, 5-7, 9-10, 12-13, 16, 18-23 |
| Y | CN 110764849 A (UC MOBILE LIMITED) 07 February 2020 (2020-02-07) description, paragraphs 0046-0064 and 0079-0088 | 2-4, 8, 11, 14-15, 17 |
| Y | CN 114748873 A (BEIJING XINTANG SICHUANG EDUCATION TECHNOLOGY CO., LTD.) 15 July 2022 (2022-07-15) description, paragraphs 0040-0051 | 2-4, 8, 11, 17 |
| Y | CN 113138655 A (GUANGDONG OPPO MOBILE TELECOMMUNICATIONS CORP., LTD.) 20 July 2021 (2021-07-20) description, paragraphs 0024-0032 | 14-15 |
| A | CN 114443197 A (BEIJING BAIDU NETCOM SCIENCE AND TECHNOLOGY CO., LTD.) 06 May 2022 (2022-05-06) entire document | 1-23 |
| A | US 2021264648 A1 (SWIFTCLASS SA) 26 August 2021 (2021-08-26) entire document | 1-23 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **05 December 2023** | **26 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
|---|
| **PCT/CN2023/124034** |

| Patent document cited in search report | | | Publication date (day/month/year) | Patent family member(s) | | | Publication date (day/month/year) |
|---|---|---|---|---|---|---|---|
| CN | 110764849 | A | 07 February 2020 | None | | | |
| CN | 114748873 | A | 15 July 2022 | None | | | |
| CN | 113138655 | A | 20 July 2021 | None | | | |
| CN | 114443197 | A | 06 May 2022 | None | | | |
| US | 2021264648 | A1 | 26 August 2021 | WO | 2019238594 | A1 | 19 December 2019 |
| | | | | GB | 201809807 | D0 | 01 August 2018 |
| | | | | GB | 2574660 | A | 18 December 2019 |
| | | | | GB | 2574660 | B | 22 July 2020 |

Form PCT/ISA/210 (patent family annex) (July 2022)

**REFERENCES CITED IN THE DESCRIPTION**

**Patent documents cited in the description**

- CN 202211281435
- WO 2021114105136 A
- WO 202111410643X A